(19) Europäisches Patentamt
European Patent Office
Office européen des brevets

(11) **EP 2 212 718 B1**

(12) **EUROPÄISCHE PATENTSCHRIFT**

(45) Veröffentlichungstag und Bekanntmachung des Hinweises auf die Patenterteilung:
**08.01.2014 Patentblatt 2014/02**

(21) Anmeldenummer: **08850239.8**

(22) Anmeldetag: **07.11.2008**

(51) Int Cl.:
**G01T 1/11** (2006.01)

(86) Internationale Anmeldenummer:
**PCT/EP2008/009416**

(87) Internationale Veröffentlichungsnummer:
**WO 2009/062639 (22.05.2009 Gazette 2009/21)**

(54) **ORTSDOSIMETER ZUR MESSUNG DER UMGEBUNGSÄQUIVALENTDOSIS VON PHOTONENSTRAHLUNG UND VERFAHREN ZUM AUSLESEN**

LOCAL DOSIMETER FOR MEASURING THE AMBIENT EQUIVALENT DOSE OF PHOTON RADIATION, AND READING METHOD

DOSIMÈTRE LOCAL POUR LA MESURE DE DOSES ÉQUIVALENTES DANS UN ENVIRONNEMENT D'UN RAYONNEMENT DE PHOTONS, ET PROCÉDÉ DE LECTURE CORRESPONDANT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.11.2007 DE 102007054927**

(43) Veröffentlichungstag der Anmeldung:
**04.08.2010 Patentblatt 2010/31**

(73) Patentinhaber: **GSI Helmholtzzentrum für Schwerionenforschung GmbH
64291 Darmstadt (DE)**

(72) Erfinder:
• **FEHRENBACHER, Georg
64367 Mühltal (DE)**
• **FESTAG, Johannes Georg
64342 Seeheim-Jungenheim (DE)**
• **GROSAM, Sebastian
64409 Messel (DE)**
• **VOGT, Karsten
64291 Darmstadt (DE)**

(74) Vertreter: **Rück, Dorothee Maria
GSI
Helmholtzzentrum für
Schwerionenforschung GmbH
Planckstraße 1
D-64291 Darmstadt (DE)**

(56) Entgegenhaltungen:
• **LAKSHMANAN A R ET AL: "Estimation of ambient dose equivalent from environmental radiation using a CaSO4:Dy thermoluminescence dosemeter" RADIATION PROTECTION DOSIMETRY, NUCLEAR TECHNOLOGY PUBLISHING, GB, Bd. 32, Nr. 2, 1. Januar 1990 (1990-01-01), Seiten 127-130, XP008108741 ISSN: 0144-8420**
• **PERRY O R ET AL: "LiF:Mg,Cu,P based environmental dosemeter and dose calculation algorithm" RADIATION PROTECTION DOSIMETRY, NUCLEAR TECHNOLOGY PUBLISHING, GB, Bd. 85, Nr. 1-4, 1. Januar 1999 (1999-01-01), Seiten 273-281, XP008108743 ISSN: 0144-8420**
• **HRANITZKY C ET AL: "The use of the Monte Carlo simulation technique for the design of an H*(10) dosemeter based on TLD-100" RADIATION PROTECTION DOSIMETRY, NUCLEAR TECHNOLOGY PUBLISHING, GB, Bd. 100, Nr. 1-4, 1. Januar 2002 (2002-01-01), Seiten 279-282, XP008108744 ISSN: 0144-8420**
• **C HRANITZKY ET AL: 'Prototype Development of a Thermoluminescence Dosimeter Based on Monte Carlo Simulation Methods', [Online] 28 April 2004, XP055024915 Gefunden im Internet: <URL:http://irpa11.irpa.net/pdfs/3h26.pdf> [gefunden am 2012-04-18]**

**Beschreibung**

Gebiet der Erfindung

Die Erfindung betrifft ein Ortsdosimeter zur Messung der Umgebungsäquivalentdosis von Photonenstrahlung und ein Verfahren zum Auslesen eines solchen Ortsdosimeters.

Hintergrund der Erfindung

Beim Umgang mit radioaktiven Stoffen sowie beim Betrieb von Beschleunigern, Röntgenanlagen und Störstrahlern sind zum Schutz von Personen Strahlenschutzbereiche einzurichten, in denen jeweils bestimmte Schutzvorschriften gelten. Dies macht eine Überwachung d.h. eine kontinuierliche Messung der Strahlung erforderlich. Hierfür werden sogenannte Dosimeter eingesetzt.

Für die Strahlenschutzüberwachung, insbesondere an Beschleunigern ist neben der Messung der Neutronenstrahlenpegel auch die Messung der Photonenstrahlung notwendig. Mit Inkrafttreten der neuen Strahlenschutzverordnung und Röntgenverordnung sind neue Messgrößen für die Ortsdosis/Personendosis zu verwenden. Die bisher gebrauchte Dosisgröße "Photonenäquivalentdosis Hx" wird durch die Dosisgröße "Umgebungsäquivalentdosis H*(10)" für durchdringende Strahlung ersetzt.

Die bisher gebrauchte Dosisgröße basiert auf der Dosis, die durch Strahlung frei Luft erzeugt wird; die neue Dosisgröße ist definiert durch die Dosis, die durch die gleiche Strahlung in 10 mm Tiefe eines genormten Prüfkörpers entsteht (ICRU-Kugel; ICRU = International Commission on Radiation, Units and Measurements). Die Definition ist wie folgt: Die Umgebungsäquivalentdosis H*(10) am interessierenden Punkt im tatsächlichen Strahlungsfeld ist die Äquivalentdosis, die im zugehörigen ausgerichteten und aufgeweiteten Strahlungsfeld in 10 mm Tiefe in der ICRU-Kugel auf dem der Strahleneinfallsrichtung entgegengesetzten Radiusvektor erzeugt würde.

Es existieren aktive, d.h. elektronische Ortsdosimeter, und passive Ortsdosimeter. Als aktive Monitore sind z.B. Szintillationsdosimeter, Geiger-Müller-Zählrohre, Proportionalzählrohre und Ionisationskammern bekannt.

Aus der DE 697 11 199 T2 ist ein Dosimeter für niederenergetische Röntgen- und Gammastrahlung bekannt, mit welchem unter anderem die Umgebungsäquivalentdosis H* gemessen werden kann. Dieses Dosimeter verwendet eine Photodiode auf Siliziumbasis und einen zweiten Detektor auf Diamantbasis, deren Messsignale von Stromvorverstärkern und Analog-Digitalwandlern elektronisch verarbeitet wird.

Mit aktiven Monitoren z.B. vom Typ FHZ 600A (Vertrieb Thermo Electron, Erlangen) werden die Pegel der produzierten Gammastrahlung z.B. in der Experimentierhalle EH als auch im Bereich der Experimente am Synchrotron der Gesellschaft für Schwerionenforschung mbH erfasst. Aktive Monitore haben den Nachteil, dass sie aufwändig und teuer sind, und einen Stromanschluss erfordern oder regelmäßig Batterien gewechselt werden müssen. Ferner können sie bei kurzen starken Strahlungspulsen, die insbesondere bei gepulst betriebenen Beschleunigern auftreten können, übersteuern, was eine Verfälschung des Überwachungsergebnisses zur Folge haben kann. Für die Messung von gepulster Röntgen- und Gammastrahlung werden daher bevorzugt passive Dosimeter eingesetzt.

Aus der DE 1 489 922 ist ein Verfahren zur Dosismessung von Strahlung im Wesentlichen unter 45 keV bekannt. Hierbei werden zwei Phosphatglas-Messelemente mit unterschiedlichen Hüllen versehen, um durch Differenzbildung eine ernegieunabhängige Messung zu erhalten. Ferner soll Strahlung zwischen 40 und 80 keV unberücksichtigt bleiben, da sich diese Messwerte bei der Differenzbildung aufheben.

Passive Ortsdosimeter enthalten typischerweise ein passives Detektorelement, welches die einfallende Strahlung aufgrund physikalischer Prozesse ohne die Notwendigkeit von elektrischem Strom aufnimmt und speichert. Ein typisches Beispiel hierfür sind Thermolumineszenzdetektoren (TLD). Thermolumineszenzdetektoren enthalten z.B. Lithium-Fluorid-Kristalle der Isotope $^{6}$LiF oder $^{7}$LiF, wobei sich $^{6}$LiF und $^{7}$LiF im Ansprechverhalten für Neutronenstrahlung unterscheiden, für Photonenstrahlung aber dasselbe Ansprechverhalten aufweisen. Derartige Thermolumineszenzdetektoren sind z.B. von der Firma Thermo Electron GmbH erhältlich. Auf Thermolumineszenz-Detektorkarten sind z.B. vier $^{7}$LiF-Kristalle aufgebracht. Die bestrahlten Detektorkarten werden in einem Automaten ausgewertet. In einem Erhitzungsverfahren wird dazu das von den TLD's emittierte Licht mittels Photomultipliern detektiert und so genannte Glow-Kurven aufgenommen. Über die gemessenen Glow-Kurven wird die Dosis bestimmt.

Aus der DE 39 03 113 A1 ist ein Dosimeter mit einer Dosimeterkarte mit den vorstehend genannten Lithiumfluorid-Kristallen bekannt. Hierbei geht es aber nicht um ein Ortsdosimeter, sondern um ein Personendosimeter und dabei vor allem um die Gestaltung der Detektorkarte. Diese soll quadratisch ausgebildet sein, um den Abstand der Kristalle zu vergrößern. Personendosimeter sind typischerweise in Form einer Plakette, einer sogenannten "badge" ausgebildet. In "Estimation of ambient dose equivalent from environmental radiation using a CaSO4 thermoluminescence dosemeter" von A.R. Lakshmanan et al. in Radiation Protection Dosimetry Vol. 32, No. 2 pp. 127-130, 1990, ISSN: 0144-8420 wird vorgeschlagen, eine derartige Plakette als Umgebungsdosimeter zu verwenden. Diesbezüglich sind Schätzungen für das Ansprechverhalten mit Metallfiltern und Kunststofffenstern beschrieben. In "Li:Mg, Cu, P based environmental dosemeter and dose calculation algorithm" von O.R. Perry et al. in Radiation Protection Dosimetry Vol. 85, Nos. 1-4 pp. 273-281, 1999, ISSN: 0144-8420 wird ein Berechnungsalgorhytmus für eine Plakette beschrieben.

Es sind H*(10)-Ortsdosimeter der Fa. Seibersdorf Research bekannt, welche eine Aluminium-Dosimeterkarte mit vier Lithium-Fluorid-Chips enthalten. Die Dosimeterkarten sind zum Schutz vor Verschmutzung in eine Kunststoffverbundfolie eingeschweißt und werden von oben in einen offenen Spalt in einen Kunststoffzylinder eingesetzt (vgl. auch "The use of the Monto Carlo simulation technique for the design of an H*10 dosemeter based on TLD-100" von C. Hranitzky et al. in Radiation Protection Dosimetry Vol. 101 Nos. 1-4, pp. 279-282, 2002, ISSN: 0144-8420 sowie 11th International Congress of the International Radiation Protection Association, 23.-28. Mai 2004, Spanien, "Prototype Development of a Thermoluminescence Dosimeter Based on Monte Carlo Simulation Methods" von C. Hranitzki et al.). Anschließend wird das Dosimeter mit einer pulverbeschichteten Aluminium-Schutzkappe verschlossen, um am Messort aufgestellt oder aufgehängt zu werden und während einer 3-monatigen Messperiode zu messen.

Nachteilig bei diesen Ortsdosimetern, ist zunächst, dass das Ansprechvermögen der Thermolumineszenzdetektoren eine starke Energieabhängigkeit aufweist. Durch gesetzliche Vorschriften, z.B. die deutsche Strahlenschutzverordnung (vgl. Verordnung über den Schutz vor Schäden durch ionisierende Strahlen (Strahlenschutzverordnung - StrlSchV) vom 20. Juli 2001) ist mit der vorstehend erläuterten Messgröße H*(10) die Messgröße vorgegeben, die von einem Umgebungsäquivalentdosimeter gemessen werden soll.

Für reine Thermolumineszenz-Kristalle liegt die Energieabhängigkeit aber nur in einem Energiebereich von ca. 100 keV bis 1 MeV ähnlich der der Messgröße H*(10). Auch die H*(10)-Ortsdosimeter der Fa. Seibersdorf Research sind trotz des Kunststoffzylinders lediglich mit einem Energie-Gebrauchsbereich von 30 keV bis 1,3 MeV angegeben. Insbesondere problematisch für viele Anwendungsgebiete ist die mangelnde Genauigkeit im Bereich zwischen 10 keV und 30 keV. Generell wäre ein Messbereich von 10 keV bis 3 MeV, besser noch bis 10 MeV wünschenswert.

Überdies ist fraglich, ob diese Ortsdosimeter eine hinreichende Messgenauigkeit über den gesamten Winkelbereich von 360° besitzen. So ist z.B. nicht selbstverständlich, dass ein Ortsdosimeter, welches unter 0° eine hinreichende Messgenauigkeit über ein bestimmtes Energieintervall besitzt, diese auch unter z.B. 75° besitzt.

Alles in allem besteht demnach ein Verbesserungsbedarf hinsichtlich der bekannten Ortsdosimeter.

Allgemeine Beschreibung der Erfindung

Die Erfindung hat sich daher die allgemeine Aufgabe gestellt, ein Ortsdosimeter und ein Auslese-Verfahren bereit zu stellen, welche eine genaue Messung der Umgebungsäquivalentdosis auch von gepulster Photonenstrahlung ermöglichen.

Eine spezifischere Aufgabe der Erfindung ist es, ein Ortsdosimeter und ein Auslese-Verfahren bereit zu stellen, welche ein spektrales Ansprechverhalten für Photonenstrahlung abbilden können, das einer vordefinierten Normfunktion für eine relative Dosisanzeige über einen möglichst großen zu dosimetrierenden Spektralbereich möglichst genau entspricht.

Noch eine spezifischere Aufgabe der Erfindung ist es, ein H*(10)-Ortsdosimeter bereit zu stellen, welches im Energie-Bereich unter 100 keV, insbesondere zwischen 10 keV und 30 keV, aber ggf. auch zusätzlich im Energie-Bereich über 1,3 MeV bis etwa 3 MeV oder sogar bis 10 MeV eine genaue Messung der Umgebungsäquivalentdosis ermöglicht.

Noch eine Aufgabe der Erfindung ist es, ein H*(10)-Ortsdosimeter bereit zu stellen, welches in dem gewünschten Energie-Bereich eine möglichst winkelunabhängige Messgenauigkeit ermöglicht.

Die Aufgabe der Erfindung wird durch den Gegenstand der unabhängigen Ansprüche gelöst. Vorteilhafte Weiterbildungen der Erfindung sind in den Unteransprüchen definiert.

Erfindungsgemäß wird ein passives, nicht elektronisches Ortsdosimeter zur Messung der Umgebungsäquivalentdosis H*(10) von Photonenstrahlung bereit gestellt. Die Umgebungsäquivalentdosis wird über einen Winkel von 360° bzw. ggf. sogar einen Raumwinkel von $4\pi$ möglichst richtungsunabhängig gemessen. Der Gebrauchsbereich des Ortsdosimeters umfasst Röntgen- und Gammastrahlung im Intervall von vorzugsweise zumindest 10 keV bis über 1 MeV, besonders bevorzugt bis 3 MeV oder sogar bis 10 MeV.

Das Ortsdosimeter umfasst einen Streukörper für die Photonenstrahlung und eine Detektorkarte mit zumindest einem ersten Paar Photonenstrahlungs-empfindlicher passiver Detektorelemente, insbesondere zwei Thermolumineszenz-Detektorchips, z.B. zwei Lithium-Fluorid-Chips (LiF-Chips). Demnach sind die Detektorelemente Thermolumineszenz-Detektorelemente, vorzugsweise Lithiumfluoridkristall-Thermolumineszenz-Detektorelemente. Es können aber auch andere Thermolumineszenzmaterialien eingesetzt werden. Die beiden Detektorelemente selbst weisen dasselbe Ansprechverhalten für die zu messende Photonenstrahlung auf. Vorzugsweise sind beide Detektorelemente identisch, es wäre jedoch auch denkbar einen [6]LiF-Chip und einen [7]LiF-Chip zu verwenden, da diese für die zu messende Photonenstrahlung dasselbe Ansprechverhalten aufweisen. Vorzugsweise sind die Detektorelemente in Form der LiF-Chips jeweils auf eine dünne Kunststofffolie aufgeklebt und mittels der Kunststofffolie in Fenstern in einem Aluminiumrahmen der Detektcrkarte aufgehängt. Die LiF-Chips können aber je nach Hersteller der Detektorkarte, auch zwischen zwei Kunststofffolien eingespannt sein. Die LiF-Chips haben z.B. eine Größe von etwa 3 mm x 3 mm und eine Dicke von etwa 0,5 mm. Solche Detektorkarten sind kommerziell erhältlich, z.B. von der Fa. Thermo Electron GmbH. Die Detektorkarte definiert demnach eine Kartenebene in der die beiden Detektorelemente nebeneinander oder übereinander auf der Detektorkarte angeordnet, genauer in Fenstern der Detektorkarte eingespannt sind. Die Anordnung aus Streukörper und Detektorelementen ist im Wesentlichen spiegelsymmetrisch zu der Kartenebene aufgebaut ist, so dass die beiden Detektorelemente für Photonenstrahlung in gleicher Weise von beiden Seiten der Kartenebene empfindlich sind, um eine möglichst richtungsunabhängige Messung der Photonenstrahlung in einem Winkelbereich von nahezu 360° zu erreichen. Insbesondere soll das Ansprechverhalten für Strahlung, die von vorne und hinten, bezogen auf die Detektorkarte, auf das Detektorelement trifft, möglichst gleich sein. Eine gewisse Richtungsabhängigkeit in Bezug auf den Einfallswinkel zur Normalen der Kartenebene, z.B. senkrecht zur Kartenebene verglichen mit einem Winkel von 75° in Bezug auf die Normale, ist grundsätzlich unerwünscht, aber unvermeidbar. Diese Richtungsabhängigkeit kann aber mit der Erfindung gering gehalten werden.

Erfindungsgemäß ist das erste der beiden Detektorelemente zwischen zwei Filterfolien positioniert, so dass die auf das erste Detektorelement treffende Photonenstrahlung entweder von der einen (vorderen) oder der anderen (hinteren) Filterfolie gefiltert wird, je nachdem ob die Photonenstrahlung von vorne oder von hinten auf das erste Detektorelement trifft, wobei die beiden Filterfolien in Bezug auf ihre spektrale Filterwirkung gleich ausgebildet sind, um für Photonenstrahlung von vorne und von hinten dieselbe spektrale Filterwirkung zu erreichen. Unter spektraler Filterwirkung wird im Sinne der Erfindung verstanden, dass die Filterwirkung eine Funktion der Energie ist, d.h. abhängig von der Energie unterschiedlich gefiltert wird. Die Spektral-Filterfolien sind insbesondere wirksam, die Photonenstrahlung im Energiebereich unter 30 keV gegenüber höheren Energien, insbesondere zwischen 100 keV und 1 MeV zu unterdrücken, haben also in dem gewünschten Messbereich eine signifikante und gewollte spektrale Filterwirkung auf die Photonenstrahlung in dem zu dosimetrierenden Messintervall und sind nicht mit den Standard-Aufhängungsfolien für die LiF-Chips zu verwechseln. Die Filterfolien verändern also gezielt das Photonenspektrum zu lasten der niedrigen Energien unter 30 keV. Auf der anderen Seite dürfen die Filterfolien nicht zu stark absorbierend gewählt werden, um noch eine hinreichende Intensität der Photonenstrahlung für die Messung passieren zu lassen.

Wichtig ist, dass nur eines der beiden Detektorelemente sich zwischen den besagten Filterfolien befindet. D.h. dass sich das zweite der beiden Detektorelemente nicht zwischen solchen Filterfolien wie das erste Detektorelement befindet, so dass die auf das zweite Detektorelement treffende Photonenstrahlung eine andere spektrale Verteilung aufweist als die auf das erste Detektorelement treffende Photonenstrahlung. Insbesondere ist in der spektralen Verteilung der Photonenstrahlung die auf das erste Detektorelement trifft, der Energiebereich zwischen 10 keV und 30 keV gegenüber höheren Energien reduziert, aber vorzugsweise noch messbar vorhanden.

Es ist ersichtlich, dass die Erfindung auch mit unterschiedlichen Filterfolien an beiden Detektorelementen realisiert werden könnte, dies soll demnach nicht ausgeschlossen sein. Wichtig ist, dass die Photonenstrahlung, die auf das erste Detektorelement trifft, anders gefiltert wird, als die Photonenstrahlung die auf das zweite Detektorelement trifft, dabei aber jeweils unabhängig davon, ob die Strahlung von vorne oder von hinten auf das Detektorelement trifft. Im einfachsten Fall sind an dem zweiten Detektorelement demnach keine Filterfolien vorgesehen (nicht zu Verwechseln mit den Aufhängungsfolien), so dass die Photonenstrahlung, die auf das zweite Detektorelement trifft, innerhalb des Streukörpers ungefiltert bleibt.

Dass das zweite Detektorelement nicht zwischen solchen Filterfolien wie das erste Detektorelement angeordnet ist, bedeutet demnach, dass das zweite Detektorelement entweder i) nicht zwischen Filterfolien angeordnet ist oder ii) zwischen Filterfolien mit signifikant anderer spektraler Filterwirkung für die zu messende Photonenstrahlung als das erste Detektorelement angeordnet ist.

In vorteilhafter Weise kann hierdurch mit einem sehr einfach aufgebauten passiven Ortsdosimeter das spektrale Ansprechverhalten mittels der Bildung einer gewichteten Summe der beiden Messwerte der beiden Detektorelemente gezielt verändert werden. Dies ist möglich, da das erste und zweite Detektorelement aufgrund der unterschiedlichen Filterung Strahlungsdosen mit unterschiedlicher spektraler Verteilung messen. Somit kann die Energieabhängigkeit der Messung der Messgröße H*(10) über ein möglichst großes Energieintervall möglichst genau abgebildet werden.

Gemäß einer bevorzugten Ausführungsform der Erfindung, weist das Ortsdosimeter ein zweites Paar Photonenstrahlungs-empfindlicher Detektorelemente auf. Dieses zweite Paar ist vorzugsweise identisch mit dem ersten Paar ausgebildet und weist ebenso vordere und hintere Filterfolien um eines der beiden Detektorelemente auf, so wie bei dem ersten Paar. Somit ist das erste der beiden Detektorelemente des zweiten Paares zwischen zwei Filterfolien positioniert, so dass die auf das erste Detektorelement des zweiten Paares treffende Photonenstrahlung entweder von der einen oder der anderen Filterfolie gefiltert wird, je nachdem ob die Photonenstrahlung von vorne oder von hinten auf das erste Detektorelement des zweiten Paares trifft, wobei die beiden Filterfolien des ersten Detektorelements des zweiten Paares in Bezug auf ihre spektrale Filterwirkung gleich ausgebildet sind, um für Photonenstrahlung von vorne und von hinten dieselbe spektrale Filterwirkung zu erreichen. Ferner sind die Filterfolien des ersten Detektorelements des zweiten Paares und die Filterfolien des ersten Detektorelements des ersten Paares in Bezug auf ihre spektrale Filterwirkung ebenfalls gleich ausgebildet. Weiter ist das zweite der beiden Detektorelemente des zweiten Paares nicht zwischen solchen Filterfolien wie das erste Detektorelement des zweiten Paares angeordnet, so dass die auf das zweite Detektorelement des zweiten Paares treffende Photonenstrahlung eine andere spektrale Verteilung aufweist, d.h. ungefiltert oder ggf. anders gefiltert ist, als die auf das erste Detektorelement des zweiten Paares treffende spektral gefilterte Photonenstrahlung.

Der Vorteil der doppelten Auslegung liegt darin begründet, dass bei zwei identisch ausgebildeten Detektorpaaren sowohl die Dosismesswerte der jeweils ersten Detektorelemente beider Paare gemittelt werden können als auch die Dosismesswerte der jeweils zweiten Detektorelemente beider Paare gemittelt werden können und dann die gewichtete Summe aus den beiden gemittelten Messwerten gebildet wird. Auf den ersten Blick mag dies einfach erscheinen, hat aber bei den üblicherweise verwendeten Detektorkarten einen besonderen Vorteil in Bezug auf die Richtungsunabhängigkeit der Messung. Die vier Detektorelemente sind nämlich vorzugsweise in einer viereckigen Konfiguration auf der Karte angeordnet und zwar so, dass das erste Detektorelement des ersten Paares und das zweite Detektorelement des zweiten Paares diagonal gegenüber liegen. Mit anderen Worten liegen die beiden Paare parallel nebeneinander und die beiden Detektorelemente jedes Paares liegen jeweils untereinander auf der Detektorkarte. Ferner ist der Streukörper vorzugsweise im Großen und Ganzen zylindersymmetrisch und die Rotations-Symmetrieachse des Streukörpers verläuft zwischen den beiden Paaren, also sowohl zwischen den beiden ersten Detektorelementen als auch zwischen den beiden zweiten Detektorelementen. D.h. die beiden Paare liegen jeweils (spiegelsymmetrisch) neben der Symmetrieachse. Die Detektorkarte bricht aufgrund ihrer flächigen Form naturgemäß die Zylindersymmetrie des Dosimeters und bringt damit eine grundsätzlich unerwünschte Richtungsabhängigkeit in das System ein. Die hierdurch verursachte Richtungsabhängigkeit kann aber bei dieser Ausführungsform durch die Mittelung zwischen den beiden identisch ausgebildeten Paaren diesseits und jenseits der Symmetrieachse vermindert werden, wie experimentell nachgewiesen werden konnte. Hierfür kann unter anderem der Umstand genutzt werden, dass die Strecke, welche die Photonenstrahlung, die unter einem Winkel schräg zur Kartennormalen durch den Streukörper zu den beiden Paaren zurücklegt unterschiedlich ist, da die Paare in Bezug auf schräg einfallende Strahlung diesseits und jenseits der Symmetrieachse angeordnet sind.

Die vier Detektorelemente sind vorzugsweise als identische Thermolumineszenz-Detektorelemente, z.B. Lithiumfluorid-Thermolumineszenz-Detektorelemente mit $^6$LiF-Kristallen oder $^7$LiF-Kristallen ausgebildet. Eine Kombination von $^6$LiF-Kristallen oder $^7$LiF-Kristallen ist wie vorstehend ausgeführt wurde, jedoch auch möglich.

Der Streukörper besteht vorzugsweise aus einem Material aus Elementen mit niedriger Kernladungszahl Z, vorzugsweise nicht größer als Z = 6, d.h. Kohlenstoff. Andernfalls wird der Absorptionsquerschnitt ggf. zu groß. Daher werden Polymere bevorzugt, die ausschließlich aus Kohlenstoff- und Wasserstoff-Atomen bestehen oder allenfalls einen geringen Anteil an höherwertigen Elementen aufweisen. Vorzugsweise ist der Streukörper demnach aus einem Kunststoff hergestellt, der im Wesentlichen nur aus Kohlenstoff- und Wasserstoffatomen besteht. In Frage kommen daher (nichthalogenierte) Polyolefine, insbesondere Polyethylen. Demnach ist der Streukörper vorzugsweise aus einem Polyolefin hergestellt. In einer Ausführungsform weist der Streukörper einen Durchmesser von 50 mm $\pm$ 5 mm auf.

Der Streukörper hat vorzugsweise eine in zumindest einer Ebene quer zur Kartenebene rotationssymmetrische Form. Besonders bevorzugt ist ein Kreiszylinder in dessen Mitte, symmetrisch zur Rotationssymmetrieachse, die Detektorkarte angeordnet ist, wobei die beiden Paare spiegelsymmetrisch zur Achse angeordnet sind. Allerdings sind auch andere Formen, insbesondere mit noch höherer Symmetrie, z.B. eine Kugel oder ein abgerundeter Kreiszylinder denkbar. Der Durchmesser des Kreiszylinders beträgt vorzugsweise 50 mm $\pm$ 5 mm, was ein guter Kompromiss zwischen Streu- und Absorptionsverhalten des Streukörpers darstellt.

Gemäß einer besonders bevorzugten Ausführungsform ist der Streukörper entlang der Ebene der Detektorkarte in zwei getrennte Hälften geteilt; im Falle des Kreiszylinders also bevorzugt entlang der Symmetrieachse. Mindestens eine der beide Hälften, bevorzugt beide, weisen eine ausgefräste Aussparung auf, in die die Detektorkarte eingebettet wird, um im Betriebszustand vollständig von dem Streuelement umschlossen zu sein. Um die Detektorkarte leicht einsetzen und entnehmen zu können, sind die beiden Zylinder-Hälften zwischen einem geöffneten Zustand und einem geschlossenen Betriebszustand relativ zueinander beweglich. In dem geschlossenen Betriebszustand werden die beiden Hälften lösbar miteinander verbunden, z.B. verschraubt und die ausgefrästen Aussparungen bilden demnach einen inneren allseits geschlossenen Hohlraum, in welchem die Detektorkarte eingebettet ist. Besonders bevorzugt sind die beiden Hälften um eine Achse senkrecht zur Kartenebene, d.h. entlang der Schnittfläche zwischen den beiden Hälften relativ zueinander drehbar verbunden, um die Detektorkarte in dem im Betriebszustand allseits geschlossenen Hohlraum des Streukörper einzuschließen, und die Detektorkarte in dem offenen Zustand einsetzen und entnehmen zu können. Falls gewünscht, können die beiden Hälften in dem Betriebszustand noch von einer Schutzhülle umgeben werden, die das Eindringen von Wasser oder Schmutz in den Spalt zwischen den beiden Hälften verhindert. Die Schutzhülle sollte ebenfalls aus einem Kunststoff im Wesentlichen nur aus Elementen mit niedrigem Z, z.B. ebenfalls aus einem Polyolefin, insbesondere Polyethylen, bestehen und möglichst dünn sein, um die Messung so weit möglich nicht zu beeinträchtigen oder entsprechende Fenster aufweisen. Insbesondere ist es vorteilhaft, keine Metall- oder Aluminiumhülse um den Streukörper vorzusehen, da diese das Ergebnis auf Grund ihrer Absorptionseigenschaften für Photonenstrahlung beeinträchtigen würde.

Besonders bevorzugt ist es, die Filterfolien an den Innenseiten der Streukörper-Hälften zu befestigen und zwar an den Stellen zwischen denen die beiden ersten Detektorelemente der beiden Paare zu liegen kommen, wenn die Detektorkarte in dem Betriebszustand in dem Hohlraum zwischen den beiden Hälften eingebettet ist. Es ist von Vorteil, dass die Filterfolien beim Entnehmen der Detektorkarte an dem Streukörper befestigt bleiben, da sie zum Auslesen der Thermolumineszenz-Detektorchips von diesen entfernt werden müssen.

Die Filterfolien bestehen vorzugsweise aus einem Material mit einer Kernladungszahl von größer oder gleich 12. Zumindest ist ein höheres Z als für den Streukörper notwendig, um eine hinreichende spektrale Filterfunktion zu gewährleisten. Als besonders geeignet hat sich eine Kupferfolie (Z = 29) erwiesen, allerdings sind z.B. auch andere Metalle oder Materialien verwendbar. Demnach sind die Filterfolien vorzugsweise Metallfolien.

Werden Kupferfolien verwendet, so liegt deren bevorzugte Dicke vorzugsweise im Bereich von 10 $\mu$m bis 1000 $\mu$m, besonders bevorzugt zwischen 25 $\mu$m und 100 $\mu$m. In diesem Bereich wird das Verhältnis aus spektraler Filterwirkung und Absorption als optimal angesehen.

Werden andere Materialien verwendet, kann deren Dicke nach folgender Formel berechnet werden:

$$d = \frac{Z_{Cu}^4}{Z^4} d_{Cu} \qquad (1)$$

wobei $Z_{Cu}$ die Kernladungszahl von Kupfer ist, $Z$ die (ggf. mittlere) Kernladungszahl des Folienmaterials ist, und $d_{Cu}$ zwischen 10 $\mu$m und 1000 $\mu$m, besonders bevorzugt zwischen 25 $\mu$m und 100 $\mu$m liegt.

Die Erfindung betrifft ferner ein Verfahren zur Messung der Umgebungsäquivalentdosis H*(10) von Photonenstrahlung in einem Energiebereich von 10 keV bis 10 MeV mit einem Ortsdosimeter mit folgenden Schritten:

Bereitstellen des Ortsdosimeters an einem festgelegten Ort erhöhter Strahlungspegel, wobei es nicht auf den Drehwinkel des Ortsdosimeters ankommt,

Bestrahlen des Ortsdosimeters an dem festgelegten Ort mit Photonenstrahlung in dem zu dosimetrierenden Energiebereich von 10 keV bis 10 MeV über eine gewisse Zeitdauer von typischerweise einigen Tagen, Wochen oder Monaten, d.h. es wird eine nicht-zeitaufgelöste, speichernde Messung durchgeführt, bei die Detektorelemente die Photonenstrahlung über die Zeitdauer kumulieren. Hierbei wird die Photonenstrahlung zunächst für alle Detektorelemente von dem umgebenden Streukörper gestreut und dann die auf das erste Detektorelement, bzw. die ersten Detektorelemente der beiden Paare, treffende Photonenstrahlung von unmittelbar vor und hinter dem ersten Detektorelement bzw. den beiden ersten Detektorelementen angeordneten Filterfolien zusätzlich gefiltert.

Nach Beendigung der Messdauer wird die Detektorkarte aus dem Streukörper entnommen und mit einem separaten Auslesegerät ausgelesen. Hierbei werden das erste und zweite Detektorelement separat ausgelesen und ein erster Messwert für die Strahlungsdosis auf dem ersten Detektorelement und ein zweiter Messwert für die Strahlungsdosis auf dem zweiten Detektorelement bestimmt.

Anschließend wird eine gewichtete Summe aus dem ersten und zweiten Messwert, mit vordefinierten Gewichtungsfaktoren gebildet, wobei die Gewichtungsfaktoren vordefinierte Konstanten sind, die von der Dicke und dem Material der Filterfolien abhängen. Die gewichtete Summe $\sum_{GW}$ wird vorzugsweise nach folgender Formel berechnet:

$$\sum_{GW} = f_1 \cdot MW_{PE+Cu} + f_2 \cdot MW_{PE} \qquad (2)$$

wobei $MW_{PE+Cu}$ der erste Messwert, nämlich derjenige des ersten Detektorelements zwischen den (Kupfer-)Filterfolien ist, $MW_{PE}$ der zweite Messwert, nämlich derjenige des zweiten Detektorelements ohne Filterfolien ist, $f_1$ der Gewichtungsfaktor für den ersten Messwert ist und $f_2$ der Gewichtungsfaktor für den zweiten Messwert ist. Es gilt ferner $f_1+f_2=1$, um die Normierung aufrechtzuerhalten.

Die hiermit berechnete gewichtete Summe wird schließlich als Messwert für die Umgebungsäquivalentdosis H*(10) verwendet.

Im Falle der Auslegung der Detektorkarte mit zwei Detektorpaaren werden in gleicher Weise alle vier Detektorelemente separat ausgelesen und die beiden Messwerte der beiden ersten Detektorelemente des ersten und zweiten Paares gemittelt. Ferner werden die beiden Messwerte der beiden zweiten Detektorelemente des ersten und zweiten Paares gemittelt. In diesem Fall werden die gemittelten Messwerte zur Bildung der gewichteten Summe verwendet. Dieses Verfahren kann zu einer Verbesserung der Richtungsunabhängigkeit des Ortsdosimeters führen.

Ohne Anspruch auf Vollständigkeit sind Anwendungsgebiete des erfindungsgemäßen Ortsdosimeters die Messung von Gammastrahlung und Röntgenstrahlung an Linearbeschleunigern (z.B. UNILAC and der Anmelderin), Ionenquellen, Lasern mit ultrakurzen Laserpulsen (z.B. Phelix bei der Anmelderin) sowie an Ionentherapieanlagen.

Im Folgenden wird die Erfindung anhand eines Ausführungsbeispiels und unter Bezugnahme auf die Figuren näher erläutert.

Kurzbeschreibung der Figuren

Es zeigen:

Fig. 1     eine schematische Darstellung einer Thermolumineszenz-Detektorkarte mit vier Detektorelementen in frontaler Ansicht,

Fig. 2     eine fotografische Darstellung des erfindungsgemäßen H*(10)-Umgebungsäquivalentdosimeters mit getrennten Zylinder-Hälften, also in vollständig geöffnetem Zustand mit einer Detektorkarte vom Typ TLD 7777,

Fig. 3     eine schematische Schnittdarstellung durch das Ortsdosimeter quer zur Kartenebene,

Fig. 4     eine schematische Darstellung der beiden getrennten Zylinder-Hälften ohne Detektorkarte in frontaler Ansicht auf deren Innenseiten,

Fig. 5     eine schematische Darstellung der beiden Zylinder-Hälften in der gedreht geöffneten Position ohne Detektorkarte,

Fig. 6     eine schematische Schnittdarstellung eines Modells des Ortsdosimeters, welche die ungefilterte und gefilterte Bestrahlung des ersten und zweiten Messelements eines Paares visualisiert,

Fig. 7     das Ergebnis einer Simulationsrechnung für einen TLD-Chip ohne Streukörper,

Fig. 8     das Ergebnis einer Simulationsrechnung für einen TLD-Chip mit Streukörper, aber ohne Filterfolie,

Fig. 9     die Ergebnisse von Simulationsrechnungen mit dem Programm FLUKA unter einem Winkel von 0° zur Detektornormalen,

Fig. 10    die Ergebnisse von Simulationsrechnungen mit dem Programm FLUKA unter einem Winkel von 75° zur Detektornormalen,

Fig. 11    die Ergebnisse der Simulationsrechnungen mit dem Programm FLUKA aus den Fig. 8 und 9 für die gewichtete Summe unter 0° und 75°.

Detaillierte Beschreibung der Erfindung

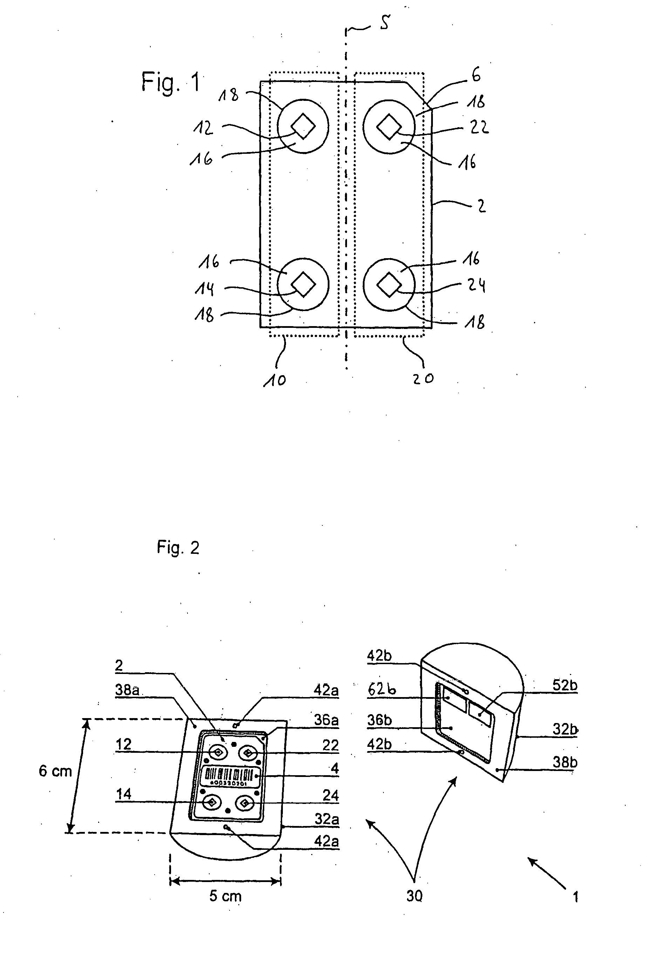

Bezug nehmend auf Fig. 1 weist die Thermolumineszenz-Detektorkarte (TLD-Karte) 2 eine im Wesentlichen rechteckig längliche Form auf und weist folgende Abmessungen auf: 4,3 cm x 3,1 cm x 0,1 cm (Länge x Breite x Höhe). Die Detektorkarte 2 besitzt vier mit Magnesium und Titan dotierte Lithium-7-Fluorid-Chips ($^7$LiF) 12, 14, 22, 24 als Detektorelemente. Die separaten Detektorelemente sind in diesem Beispiel jeweils in PTFE-Folien 16 (Teflon®, Markenname von DuPont) eingeschweißt und in jeweils einem Fenster 18 in einem Aluminium-Rahmen fixiert. Die Detektorelemente können aber auch einseitig auf entsprechende Aufhängungsfolien 16 aufgeklebt sein. Die separaten Detektorelemente 12, 14, 22, 24 sind ferner in zwei beabstandete parallele Paare 10, 20 gruppiert, wobei die beiden beabstandeten Detektorelemente jedes Paares 10, 20 jeweils untereinander angeordnet sind, in diesem Beispiel entlang der Längsseite der Detektorkarte 2. Zur genauen Identifikation besitzt jede TLD-Karte 2 einen repräsentativen Barcode 4 (vgl. Fig. 2). Die abgeflachte Ecke 6 dient zur korrekten Orientierung im Magazin des Auswertegeräts (sog. "Reader", nicht dargestellt), in dem die Detektorelemente separat ausgelesen werden. Es wurden vorliegend TLD-Karten des Typs 7777 der Firma Thermo Electron GmbH verwendet.

Bei der Erwärmung, z.B. durch einen heißen Stickstoffstrom oder einen Heizfinger werden die in den Traps der Thermolumineszenz-Kristalle sitzenden freien Elektronen erneut angeregt, wodurch sie zurück in das Valenzband fallen. Dabei emittieren sie Photonen, die von einem Sekundärelektronenvervielfacher (Photomultiplier) im Reader detektiert werden. Die Häufigkeit der ausgesandten Photonen ist dabei von der Temperatur abhängig, da die Traps in unterschiedlichen Tiefen liegen. Durch Auftragen der Photonenintensität gegenüber der Temperatur, erhält man so genannte Glühkurven mittels derer die dosimetrierte Photonenstrahlung ermittelt werden kann.

Es wurden zwei Reader vom Typ 8800 bzw. 6600 des Herstellers Harshaw und dessen Nachfolgefirma Harshaw-Bicron verwendet. Im Wesentlichen ist die Funktionsweise bei beiden Readern die Gleiche. Sie besitzen je ein Magazin zum Beladen mit TLD-Karten und ein Magazin für bereits ausgelesene Karten. Beide Systeme sind mit je einem separaten Computer, einem Drucker und einem integriertem Barcode - Scanner zur Identifizierung der TLD-Karten ausgestattet.

Die Verwendung und Auswertung von TLD-Detektorkarten ist dem Fachmann grundsätzlich bekannt, so dass dies hier keiner weiteren Vertiefung bedarf.

Die TLD-Karten 2 mit LiF-Chips 12, 14, 22, 24 eignen sich für Messungen im Energiebereich von 100 keV bis 1 MeV, wenn die Kalibrierung auf die Messgröße H*(10) bezogen wird. Dieser Bereich deckt allerdings nicht den gewünschten niederenergetischen Bereich unter 100 keV ab, welcher in der Praxis zum Beispiel Ionenquellen an Beschleunigern relevant ist, an denen eben diese niederenergetischen Photonenstrahlung auftreten können.

Zunächst wird ein Streukörper 30 aus Polyethylen (PE) verwendet, in den die Detektorkarte 2 eingebettet wird. Der Streukörper 30 liefert die nötigen Streubeiträge, damit das Dosimeter 1 auch für den niederenergetischen Bereich als H*(10)- Umgebungsäquivalentdosimeter eingesetzt werden kann. Es hat sich jedoch herausgestellt, dass die Verwendung eines PE-Streukörpers 30 alleine noch nicht ausreicht, um insbesondere in dem Bereich von 10 keV bis 30 keV die erwünschte Genauigkeit zu erzielen.

Bezug nehmend auf Fig. 2 ist das erfindungsgemäße Ortsdosimeter 1 in vollständig geöffneter Form dargestellt. Zunächst verwendet die vorliegende Erfindung einen PE-Streukörper 30 in Form eines Zylinders, welcher in der Mitte aufgesägt und somit in zwei gleiche Zylinder-Hälften 32a, 32b zerlegt wurde. Der PE-Zylinder 30 hat einen Durchmesser von 5 cm und eine Höhe von 6 cm. Eine zentrale Ausfräsung 36a, 36b in beiden Hälften 32a, 32b sorgt für den nötigen Platz für die TLD-Karte 2, die in die hierdurch entstehende Aussparung eingesetzt wird. Mittels zweier Kunststoffschrauben über Bohrungen 42a und Gewinde 42b lassen sich die beiden Zylinder-Hälften 32a, 32b lösbar miteinander verbinden und der von den beiden Aussparungen gebildete Hohlraum temporär verschließen. Alternativ kann der PE-Zylinder 30 mit einem seitlichen Einfüllschacht versehen werden, in welchen die TLD-Karte 2 eingeschoben wird. Das Ortsdosimeter kann noch mit Aufhängehalterungen an dem PE-Streukörper 30 versehen werden, die das Messen frei in Luft ermöglichen.

In den Aussparungen 36, 36b, der beiden Zylinder-Hälften 32a, 32b sind 50 $\mu$m dicke Kupferfolien 52a, 52b, 62a, 62b auf Höhe der oberen beiden Thermolumineszenz-Chips 12, 22 der TLD-Karte 2 aufgeklebt. Das erfindungsgemäß verbesserte Ansprechvermögen lässt sich nun aus gewichteten Messwerten der beiden TLD-Chip-Paare 10, 20 erzielen.

An der links dargestellten Zylinderhälfte 32a sind in gleicher Weise zwei 50 $\mu$m dicke Kupferfolien aufgeklebt, welche in der Darstellung der Fig. 2 aber von der TLD-Karte 2 verdeckt werden.

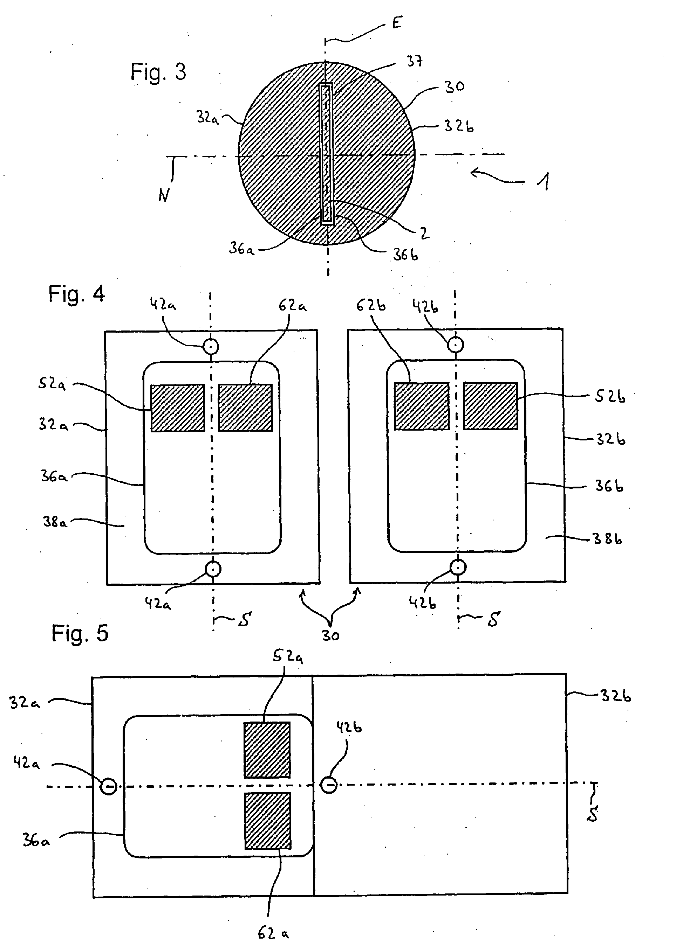

Bezug nehmend auf Fig. 3 ist die Detektorkarte 2 in einem zentralen Hohlraum 37 eingebettet, wobei die von außen einfallende Photonenstrahlung den PE-Streukörper über eine signifikante Länge durchqueren muss, je nach Winkel zur Kartennormalen N, etwa zwischen 20 mm und 34 mm.

Bezug nehmend auf Fig. 4 sind die Filterfolien 52a, 52b, 62a, 62b jeweils an der Innenseite 38a, 38b jedes der beiden Streukörper-Hälften 32a, 32b, und zwar in der jeweiligen Aussparung für die Detektorkarte 36a, 36b, befestigt. Die Filterfolien 52a, 52b, 62a, 62b sind innerhalb des Streukörpers symmetrisch zur Symmetrieachse S des Streukörpers 30 in der oberen Hälfte angeordnet. Somit sind die beiden oberen, ersten TLD-Chips 12, 22 im zusammengebauten Zustand jeweils zwischen zwei Kupfer-Filterfolien 52a, 52b bzw. 62a, 62b sandwichartig eingeschlossen, wobei die Kupfer-Filterfolien 52a, 52b, 62a, 62b die beiden ersten TLD-Chips 12, 22 vollständig beidseits überdecken. Die beiden unteren, zweiten TLD-Chips 14, 24 sind nicht zwischen Filterfolien angeordnet. Die Schnittflächen 38a, 38b und die Detektorkarte 2 bilden eine Symmetrieebene, in der die Detektorkarte 2 liegt, die also mit der Kartenebene E zusammenfällt. Die Filterfolien 52a, 52b, 62a, 62b sind auf beiden Zylinder-Hälften 32a, 32b jeweils links und rechts der Symmetrieachse angeordnet, insbesondere symmetrisch zu dieser.

Fig. 5 zeigt die beiden Streukörper-Hälften 32a, 32b relativ zu dem Betriebszustand um 180° um die Drehachse gedreht, um die Detektorkarte 2 einzusetzen und zu entnehmen.

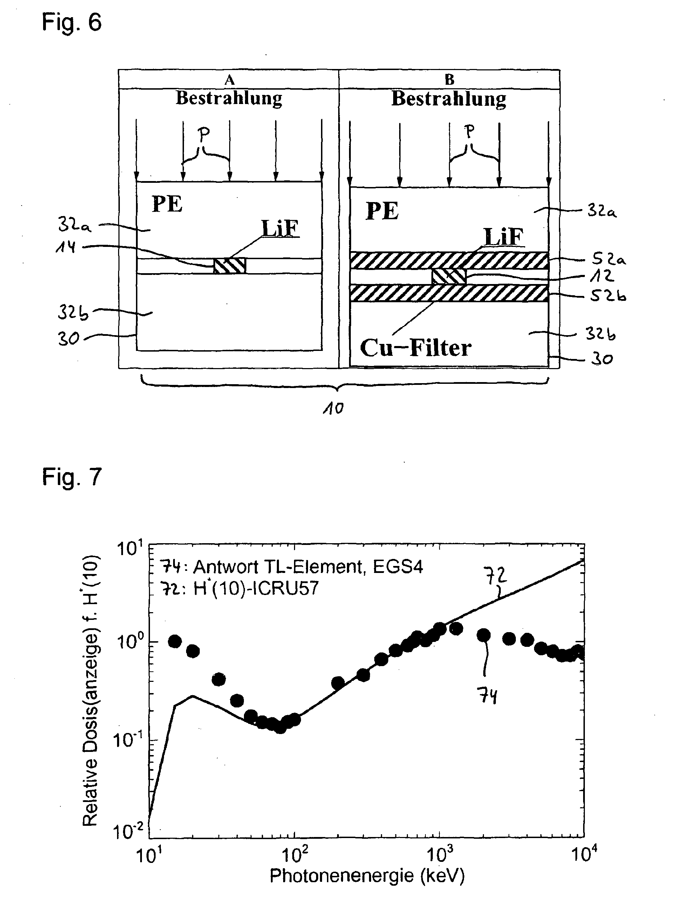

Fig. 6 zeigt eine Schnittdarstellung (nicht maßstäblich und schematisch) senkrecht zur Kartenebene E und parallel zur Symmetrieachse S durch den gefilterten ersten 12 und den ungefilterten zweiten TLD-Chip 14 eines der beiden Paare eines Modells des geschlossenen Ortsdosimeters 1. Die zu dosimetrierende Photonenstrahlung P durchquert zunächst für beide TLD-Chips 12, 14 den gemeinsamen PE-Streukörper 30. Hiernach trifft die Strahlung ungefiltert (außer vom PE-Streukörper) auf den zweiten TLD-Chip 14 (links) und gefiltert durch die vordere Kupfer-Filterfolie 52a auf den in dieser Darstellung daneben angeordneten ersten TLD-Chip 12 (rechts).

Es wurden zunächst Simulationsrechnungen für das Dosisansprechvermögen mit dem Simulationsprogramm EGS4 durchgeführt.

Aus Gründen der Vereinfachung wurde zunächst ein zylindrisches Modell entwickelt. Im Zentrum des Dosimeters sind die Photonenstrahlungs-empfindlichen Detektorelemente, die vom PE-Streukörper 30 umgeben sind. Ein TLD-Chip 12, 14 wird in diesem Beispiel mit einem Detektionsvolumen von 8,55 mm$^3$ modelliert. Der Transport der Photonen P erfolgt von der Startenergie (10 keV bis 10 MeV) herunter bis zu Energien von 5 keV. Der Transport der Elektronen wird bis zu einer kinetischen Energie von 12 keV verfolgt. Auf den Elektronentransport wird nicht verzichtet, da die Elektronen aus dem wirksamen Volumen des Detektors heraustransportiert werden können. Dies kann teilweise dadurch ausgeglichen werden, dass in das Detektionsvolumen hinein Elektronen transportiert werden. Dies muss jedoch vor allem bei Bestrahlungen mit höheren Photonenenergien genau berechnet werden, da der Streukörper 30 und das Detektorelement 12, 14 aus verschiedenen Materialien bestehen. Die Signale werden als KERMA (=kinetic energy released in matter) berechnet. Die gesamte Auswertekette mit den Aufheizprozessen im Gas, der Lichtemission und der Lichtsammlung des Photomultipliers werden nicht im Detail in der Berechnung berücksichtigt. Nur die deponierte Energie dient als Maß für das registrierte Signal. Während des Strahlungstransports wird pro primären Photon die deponierte Energie im TLD-Element berechnet und in einem Histogramm abgelegt. Aus dem Histogramm wird die gesamte deponierte Energie pro einfallendem Photon berechnet.

Aus Gründen der Verbesserung der Recheneffizienz wird das wirksame Volumen des modellierten TLD-Chips mit einem größeren Volumen (6,7 mm$^3$ bzw. 8,55 mm$^3$) berechnet, als das realer TLD-Chips 12, 14 (0,39 mm$^3$ bis 0,91 mm$^3$). Die prinzipielle Energieabhängigkeit des Ansprechvermögens des Dosimeters 1 wird durch diese Vereinfachung in der Rechnung aber nicht falsch beschrieben. Diese Rechnungen werden normiert auf die Antwort für die Gamma-Strahlung einer $^{137}$Cs-Quelle (661 keV).

Es wurde als Referenz zunächst der Fall mit den TLD-Elementen 12, 14 ohne Streukörper 30 berechnet. Das Ergebnis ist in Fig. 7 zu sehen.

Fig. 7 zeigt demnach ein Ergebnis der Simulationsrechnung für das Dosisansprechvermögen. Die durchgezogene Linie 72 zeigt die Norm H*(10)-ICRU57, und die Punkte 74 zeigen die simulierten Ergebniswerte für den TLD-Chip alleine, d.h. ohne Streukörper 30 und ohne Filterfolie 52a, 52b, 62a, 62b. Das berechnete Ansprechvermögen 74 bezüglich der Messgröße H*(10) ist in dem Energiebereich von 15 keV bis 10 MeV dargestellt. Es ist zu erkennen, dass die Simulationswerte 74 unterhalb von 100 keV und oberhalb von 1 MeV erheblich von der Normkurve 72 H*(10) abweichen. Insbesondere tritt bei Energien kleiner als 100 keV eine Überschätzung der Dosis bis zu zwei Größenordnungen auf, während für Energien über 1 MeV mit zunehmender Energie eine Unterschätzung der Dosis auftritt.

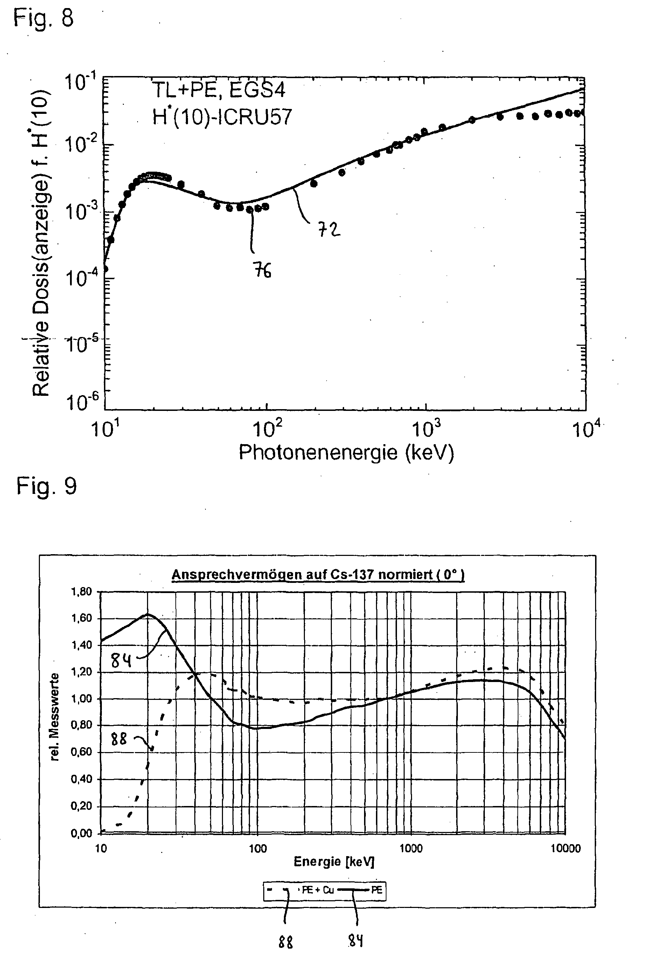

Fig. 8 zeigt das Ergebnis der Simulationsrechnung für einen TLD-Chip 14 mit einem PE-Streukörper 30 mit 24,0 mm Radius (0,92 g/cm$^3$) um den TLD-Chip 14. Die Simulationswerte sind mit 76 bezeichnet. Für den Energiebereich von 10 keV bis etwa 2 MeV ergibt sich für das Ansprechvermögen bereits eine relativ gute Übereinstimmung mit dem Verlauf der relativen Dosiskonversionsfunktion für H*(10), bezeichnet mit 72.

Es ist allerdings zu beachten, dass es noch immer zu einer Dosisüberschätzung im Energiebereich von etwa 20 keV bis 40 keV kommt. Ab etwa 3 MeV ergibt sich eine Unterschätzung der Dosisanzeige, allerdings geringer als bei dem TLD-Chip ohne Streukörper. Es ist zu beachten, dass die Abweichungen aufgrund der doppelt logarithmischen Darstellung in Fig. 8 relativ klein wirken, aber noch immer eine nicht zufriedenstellende Messgenauigkeit bedeuten. Diese Abweichungen können mit der Erfindung verbessert werden.

Zur weiteren Simulation wurden verbesserte Simulationsrechnungen mit dem Programm FLUKA durchgeführt und durch experimentelle Testmessungen verifiziert. Die Ergebnisse der Simulationsrechnungen sind in den Fig. 9-11 dargestellt.

Fig. 9 zeigt die Ergebnisse der FLUKA-Berechnungen 84, 88 unter 0°, d.h. parallel zur Normalen N der Detektorkarte 2. Auf der Y-Achse ist das relative Ansprechvermögen, normiert auf Cs-137 als Funktion der Energie der Photonenstrahlung (X-Achse) dargestellt. Die Rechnungen sind jeweils für den TLD-Chip in dem PE-Streukörper 30 einmal mit und einmal ohne Kupfer-Filterfolien (50 $\mu$m) 52a, 52b, 62a, 62b durchgeführt worden. Auch hier ist an der Kurve 84 ohne Filterfolien eine Überhöhung im Energiebereich unter etwa 40 keV zu erkennen, die im Maximum bei etwa 20 keV mehr als einen Faktor 1,6 beträgt. Im Gegensatz dazu zeigt die Kurve 88 mit den Kupfer-Filterfolien eine deutliche Unterschätzung im Energiebereich unter 40 keV. Die Filterfolien unterdrücken also das relative Ansprechvermögen im Bereich niedriger Photonenenergien gegenüber höheren Photonenenergien, wobei die Unterdrückung bei einer "Grenzenergie" $E_X$ der Photonen beginnt. Die Grenzenergie $E_X$ sollte zwischen 15 keV und 100 keV liegen. In diesem Beispiel gilt etwa $E_X$ = 30 keV. Das heißt die Filterfolien werden so gewählt, dass das relative Ansprechvermögen des gefilterten TLD-Chips 12 im Bereich zwischen der Grenzenergie $E_X$ und zumindest dem Cs-137-Normwert relativ flach verläuft und unterhalb der Grenzenergie $E_X$ erheblich abfällt.

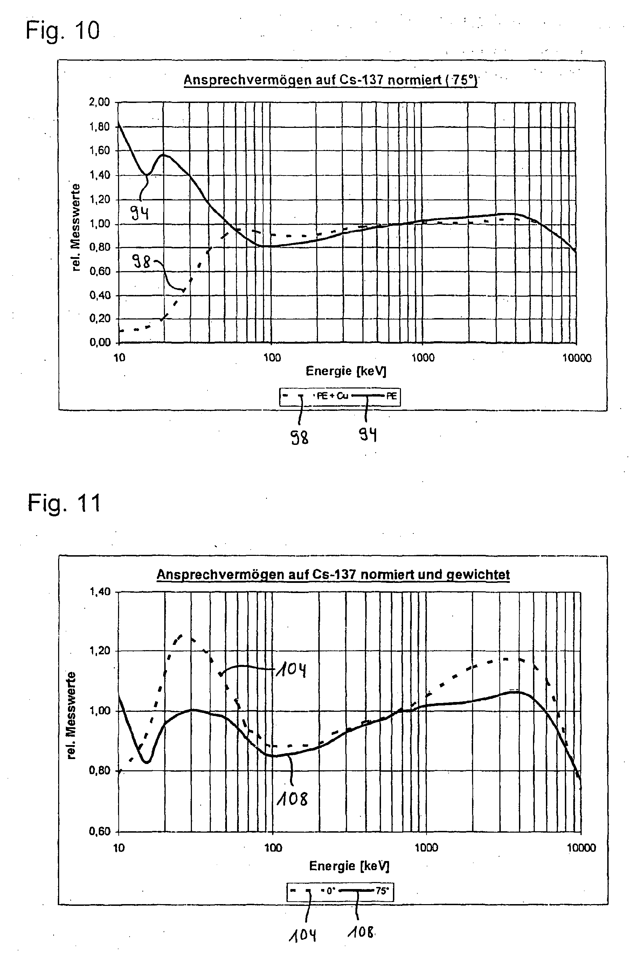

Fig. 10 zeigt entsprechende Ergebnisse wie Fig. 9, aber unter einem Winkel von 75° zur Normalen der Detektorkarte. Auch hier ist für die Werte 94 ohne Kupfer-Filterfolie eine deutliche Überhöhung unter 40 keV zu erkennen, die bei 10 keV sogar fast 100 % beträgt. Die Werte 98 mit Kupfer-Filterfolie zeigen einen etwas flacheren Verlauf als unter 0°.

Erfindungsgemäß werden nun die Werte der Simulationsrechnung mit Kupfer-Filterfolien 88 bzw. 98 ($MV_{PE+CU}$) und die Werte der Simulationsrechnung ohne Kupfer-Filterfolien 84 bzw. 94 ($MW_{PE}$) anhand folgender Gleichung gewichtet summiert:

$$\sum_{GW} = 0{,}45 \cdot MW_{PE+Cu} + 0{,}55 \cdot MW_{PE} \qquad (3)$$

d.h. die Gewichtungsfaktoren sind $f_1$ = 0,45 und $f_2$ = 0,55.

Fig. 11 zeigt die resultierenden Kurven der nach Gleichung (3) berechneten gewichteten Summen der Testergebnisse aus Fig. 9 und Fig. 10, d.h. sowohl für einen Winkel von 0° zur Normalen N (Bezugszeichen: 104) als auch für einen Winkel von 75° zur Normalen N (Bezugszeichen: 108). Die gewichtete Summe kann auch als "gewichtetes Ansprechvermögen" des erfindungsgemäßen Ortsdosimeter bezeichnet werden. Demnach ist auf der Y-Achse das relative, gewichtete Ansprechvermögen, normiert auf Cs-137 als Funktion der Energie der Photonenstrahlung (X-Achse) für 0° 104 und für 75° 108 dargestellt.

Es ist zu erkennen, dass das gewichtete Ansprechvermögen 104 unter 0°, im gesamten Energiebereich zwischen 10 keV und etwa 3 MeV um maximal etwa 25 % von der Norm abweicht und insbesondere in dem Energiebereich unter 30 keV eine deutlich geringere Abweichung aufweist als die Kurve 84 mit PE-Streukörper aber ohne Filterfolie in Fig. 9.

In Bezug auf die Ergebnisse 108 unter 75° ist eine noch bessere Genauigkeit zu erkennen. Die Abweichung unter 75° beträgt zwischen 20 keV und 40 keV weniger als 10 % und zwischen 10 keV und 20 keV weniger als 20 %.

Die spektrale Filterwirkung der Filterfolien wird demnach so gewählt, dass das normierte und gewichtete Ansprechvermögen der beiden Detektorelemente 12, 14 eines Paares 10 (mit entsprechend angepassten Wichtungsfaktoren) zumindest im Bereich von 10 keV bis 30 keV dichter bei eins liegt (vorzugsweise mit einer Abweichung von kleiner als 30 % für bestimmte Winkel, z.B. 0° und/oder 75°), als das relative Ansprechvermögen des zweiten Detektorelements 14 ohne Filterfolie 52a, 52b, d.h. nur mit Streukörper 30.

Es ist ersichtlich, dass die Messung nur bei einem solchen Testexperiment winkelselektiv durchgeführt wird. Im Realbetrieb werden alle Winkel gleichzeitig gemessen und nicht differenziert, so dass das Ortsdosimeter 1 unter allen möglichen Winkeln von 0° bis 360° eine möglichst genaue Messung ermöglichen soll. Die Testergebnisse belegen, dass die Erfindung diesbezüglich Vorzüge gegenüber einer ausschließlichen Messung nur mit einem PE-Streukörper 30 bietet.

Zusammenfassend kann festgehalten werden, dass die üblichen Dosimeter-LiF-Chip-Karten 2 geeignet sind, die Strahlung in einem Energiebereich von 100 keV bis 1 MeV richtig zu messen, wenn die Kalibrierung auf die Messgröße H*(10) 72 bezogen wird. Wird das Dosimeter 1 an Strahlungsquellen für Röntgenstrahlung verwendet, kann aber in manchen Fällen davon ausgegangen werden, dass ein erheblicher Teil der Gesamtdosis durch Photonen mit Energien kleiner als 30 keV verursacht wird. Auch die Verwendung eines PE-Streukörpers erbringt hierfür noch nicht die erwünschte Genauigkeit. Darüber hinaus gibt es an einem Beschleuniger häufig Gammastrahlung mit Energien größer als 1,3 MeV. Das erfindungsgemäße Ortsdosimeter 1 ist nun in der Lage, Röntgen- und Gammastrahlung auch in diesen Energiebereichen mit verbesserter Genauigkeit zu messen. Hierfür werden zusätzlich zu dem Streukörper spektrale Filterfolien 52a, 52b, 62a, 62b vor und hinter den ersten TLD-Chips 12, 22 angebracht. Der Streukörper 30 besteht aus Polyethylen, dessen Schichtdicke (Zylinderradius) mindestens 24 mm über den TLD-Chips beträgt. Die Filterfolie 52a, 52b, 62a, 62b ist z.B. als 50 μm dicke Kupferfolie ausgebildet und wird über jeweils nur einem TLD-Chip 12, 22 jedes TLD-Chip-Paares 10, 20 angebracht, so dass dieser TLD-Chip 12, 22 ein geringeres Ansprechvermögen vor allem bei kleinen Photonenenergien aufweist. Die gewichtete Summierung der Messwerte beider TLD-Chips 12, 14 bzw. 22, 24 jedes Paares ergibt dann ein optimiertes Ansprechvermögen.

**Patentansprüche**

1.   Ortsdosimeter (1) zur Messung der Umgebungsäquivalentdosis (H*(10)) von Photonenstrahlung (P) umfassend:

einen Streukörper (30) für die Photonenstrahlung (P), welcher Streubeiträge für den niederenergetischen Bereich der Photonenstrahlung liefert, eine in den Streukörper (30) eingebettete Detektorkarte (2) mit zumindest einem ersten Paar (10) Photonenstrahlungs-empfindlicher Detektorelemente (12, 14) mit gleichem Ansprechverhalten für die zu messende Photonenstrahlung (P),
wobei die Detektorkarte (2) eine Kartenebene (E) definiert, und die beiden Detektorelemente (12, 14) nebeneinander oder übereinander in der Kartenebene (E) auf der Detektorkarte (2) angeordnet sind, und wobei die Anordnung aus Streukörper (30) und Detektorelementen (12, 14) im Wesentlichen spiegelsymmetrisch zu der Kartenebene (E) aufgebaut ist, so dass die beiden Detektorelemente (12, 14) für Photonenstrahlung von beiden Seiten der Kartenebene (E) in gleicher Weise empfindlich sind, um eine Messung der Photonenstrahlung (P) in einem Winkelbereich von nahezu 360° zu erreichen,
**dadurch gekennzeichnet,**
**dass** zusätzlich zu dem Streubeiträge für den niederenergetischen Bereich liefernden Streukörper (30) zwei spektrale Filterfolien (52a, 52b), welche das Photonenspektrum zu Lasten der Energien unter 30 keV verändern, im Inneren des Streukörpers (30) angeordnet sind, derart,
**dass** das erste (12) der beiden Detektorelemente zwischen den beiden Filterfolien (52a, 52b) positioniert ist, so dass die auf das erste Detektorelement (12) treffende Photonenstrahlung (P) entweder von der einen (52a) oder der anderen (52b) Filterfolie gefiltert wird, je nachdem ob die Photonenstrahlung (P) von vorne oder von hinten auf das erste Detektorelement (12) trifft, wobei die beiden Filterfolien (52a, 52b) in Bezug auf ihre spektrale Filterwirkung gleich ausgebildet sind, um für Photonenstrahlung (P) von vorne und von hinten dieselbe spektrale Filterwirkung zu erreichen, und

**dass** das zweite der beiden Detektorelemente (14) nicht zwischen solchen Filterfolien (52a, 52b) wie das erste Detektorelement (12) angeordnet ist,

so dass die von dem Streukörper (30) gestreute und von einer der beiden Filterfolien (52a, 52b) spektral gefilterte auf das erste Detektorelement (12) treffende Photonenstrahlung (P) insbesondere bei Energien zwischen 10 keV und 30 keV eine andere spektrale Verteilung aufweist, als die von dem Streukörper (30) gestreute auf das zweite Detektorelement (14) treffende Photonenstrahlung (P).

**2.** Ortsdonimeter (1) nach Anspruch 1,

wobei die Detektorkarte (2) ein zweites mit dem ersten Paar (10) identisches Paar (20) Photonenstrahlungs-empfindliche Detektorelemente (22, 24) aufweist,

wobei das erste der beiden Detektorelemente (22) des zweiten Paares (20) zwischen zwei Filterfolien (62a, 62b) positioniert ist, so dass die auf das erste Detektorelement (22) des zweiten Paares 20 treffende Photonenstrahlung (P) entweder von der einen (62a) oder der anderen (62b) Filterfolie gefiltert wird, je nachdem ob die Photonenstrahlung (P) von vorne oder von hinten auf das erste Detektorelement (22) des zweiten Paares (20) trifft, wobei die beiden Filterfolien (62a, 62b) des ersten Detektorelements (22) des zweiten Paares (20) in Bezug auf ihre spektrale Filterwirkung gleich ausgebildet sind, um für Photonenstrahlung (P) von vorne und von hinten dieselbe spektrale Filterwirkung zu erreichen, und wobei die Filterfolien (62a, 62b) des ersten Detektorelements (22) des zweiten Paares (20) und die Filterfolien (52a, 52b) des ersten Detektorelements (12) des ersten Paares (10) in Bezug auf ihre spektrale Filterwirkung gleich ausgebildet sind,

wobei das zweite (24) der beiden Detektorelemente des zweiten Paares (20) nicht zwischen solchen Filterfolien (62a, 62b) wie das erste Detektorelement (22) des zweiten Paares (20) angeordnet ist, so dass die auf das zweite Detektorelement (24) des zweiten Paares (20) treffende Photonenstrahlung (P) eine andere spektrale Verteilung aufweist als die auf das erste Detektorelement (22) des zweiten Paares (20) treffende spektral gefilterte Photonenstrahlung (P).

**3.** Ortsdosimeter (1) nach Anspruch 1 oder 2,

wobei die Detektorelemente (12, 14, 22, 24) Thermolumineszenz-Detektorelemente sind und/oder

wobei der Streukörper (30) aus einem Kunststoff hergestellt ist, welcher im Wesentlichen nur aus Kohlenstoff- und Wasserstoffatomen besteht.

**4.** Ortsdosimeter (1) nach einem der vorstehenden Ansprüche,

wobei der Streukörper (30) in zumindest einer Ebene quer zur Kartenebene (E) rotationssymmetrisch ist.

**5.** Ortsdosimeter (1) nach Anspruch 2 und 4,

wobei das erste und zweite Paar (10, 20) Detektorelemente (12, 14, 22, 24) spiegelsymmetrisch zur Zylinderachse (S) angeordnet sind.

**6.** Ortsdosimeter (1) nach einem der vorstehenden Ansprüche,

wobei der Streukörper (30) entlang der Kartenebene (E) in zwei Hälften (32a, 32b) geteilt ist, wobei die beiden Hälften (32a, 32b) zwischen einem geöffneten Zustand und einem geschlossenen Betriebszustand relativ zueinander beweglich sind, wobei die beiden Hälften (32a, 32b) in dem geschlossenen Betriebszustand lösbar miteinander verbunden sind und einen inneren Hohlraum bilden, in welchem die Detektorkarte (2) eingebettet ist, und wobei die Detektorkarte (2) in dem geöffneten Zustand eingesetzt und entnommen werden kann.

**7.** Ortsdosimeter (1) nach Anspruch 6,

wobei die beiden Hälften (32a, 32b) um eine Achse senkrecht zur Kartenebene (E) drehbar miteinander verbunden sind und zwischen dem geöffneten Zustand und dem geschlossenen Betriebszustand relativ zueinander gedreht werden können, um die Detektorkarte (2) in dem im Betriebszustand allseits geschlossenen Hohlraum des Streukörpers (30) einzuschließen, und die Detektorkarte (2) in dem offenen Zustand einsetzen und entnehmen zu können.

**8.** Ortsdosimeter (1) nach Anspruch 6 oder 7,

wobei die beiden Filterfolien (52a, 52b) an jeweils einer der beiden Hälften (32a, 32b) an Stellen befestigt sind zwischen denen das erste Detektorelement (12) zu liegen kommt, wenn es in dem Betriebszustand in dem Hohlraum zwischen den beiden Hälften (32a, 32b) eingebettet ist.

**9.** Ortsdosimeter (1) nach Anspruch 6, 7 oder 8,

wobei die beiden Hälften (32a, 32b) in dem Betriebszustand von einer im Wesentlichen spektral unwirksamen Schutzhülle umgeben sind.

10. Ortsdosimeter (1) nach Anspruch 9,
    wobei die Schutzhülle aus Kunststoff besteht.

11. Ortsdosimeter (1) nach einem der vorstehenden Ansprüche,
    wobei der Streukörper (30) nicht von einem Metallgehäuse umgeben ist.

12. Ortsdosimeter (1) nach einem der vorstehenden Ansprüche,
    wobei die Filterfolien (52a, 52b, 62a, 62b) aus einem Material mit einer Kernladungszahl von größer oder gleich 12 hergestellt sind.

13. Verfahren zur Messung der Umgebungsäquivalentdosis (H*(10)) von Photonenstrahlung (P) in einem Energiebereich von 10 keV bis 10 MeV mit einem Ortsdosimeter (1), insbesondere nach einem der vorstehenden Ansprüche,
    Bereitstellen des Ortsdosimeters (1) an einem strahlungsexponierten festgelegten Ort, wobei das Ortsdosimeter (1) einen Streukörper (30) für die Priotonenstrahlung (P) und eine Detektorkarte (2) mit einem Paar (10) Photonenstrahlungs-empfindlicher Detektorelemente (12, 14) mit gleichem Ansprechverhalten für die zu messende Photonenstrahlung (P) im Inneren des Streukörpers (30) umfasst, wobei das erste (12) der beiden Detektorelemente zwischen zwei Filterfolien (52a, 52b) positioniert ist,
    Bestrahlen des Ortsdosimeters (1) an dem festgelegten Ort mit Photonenstrahlung (P) in dem Energiebereich von zumindest 10 keV bis 10 Mev über eine gewisse Zeitdauer, wobei die auf das erste Detektorelement (12) treffende Photonenstrahlung (P) von den vor und hinter der ersten Detektorelement (12) angeordneten Filterfolien (52a, 52b) gefiltert wird,
    Auslesen des Ortadoaimeters (1) nach der Zeitdauer der Bestrahlung, wobei das erste und zweite Detektorelement (12, 14) separat ausgelesen werden, und ein erster Messwert für die Strahlungsdosis auf dem ersten Detektorelement (12) und ein zweiter Messwert für die Strahlungsdosis auf dem zweiten Detektorelement (14) bestimmt wird,
    Bilden einer gewichteten Summe $\Sigma_{GW}$ aus dem ersten und zweiten Messwert, mit vordefinierten Gewichtungsfaktoren $f_1$, $f_2$, welche von der Dicke und dem Material der Filterfolien (52a, 52b) abhängt, wobei die gewichtete Summe $\Sigma_{GW}$ nach folgender Formel berechnet wird: $\Sigma_{GW} = f_1 \cdot MW_{PE+Cu} + f_2 \cdot MW_{PE}$, wobei $MW_{PE+Cu}$ der erste Messwert, $MW_{PE}$ der zweite Messwert, $f_1$ der Gewichtungsfaktor für den ersten Messwert und $f_2$ der Gewichtungsfaktor für den zweiten Messwert ist und wobei $f_1 + f_2 = 1$ gilt und die Gewichtungsfaktoren $f_1$ und $f_2$ von der Dicke und dem Material der Filterfolien (52a, 52b) abhängen,
    Verwenden der gewichteten Summe als Messwert für die Umgebungsäquivalentdosis H*(10).

14. Verfahren zur Messung der Umgebungsäquivalentdosis (H*(10)) von Photonenstrahlung (P) in einem Energiebereich von 10 keV bis 10 MeV mit einem Ortsdosimeter (1), insbesondere nach einem der vorstehenden Ansprüche 1-12,
    Bereitstellen des Ortsdosimeters (1) an einem strahlungsexponierten festgelegten Ort, wobei das Ortsdosimeter (1) einen Streukörper (30) für die Photonenstrahlung (P) und eine Detektorkarte (2) mit einem ersten Paar (10) Photonenstrahlungsempfindlicher Detektorelemente (12, 14) mit gleichem Ansprechverhalten für die zu messende Photonenstrahlung (P) und einem zweiten Paar (20) Photonenstrahlungs-empfindlicher Detektorelemente (22, 24) mit gleichem Ansprechverhalten für die zu messende Photonenstrahlung (P) im Inneren des Streukörpers (30) umfasst, wobei das erste (12) der beiden Detektorelemente des ersten Paares zwischen zwei Filterfolien (52a, 52b) positioniert ist und das erste (22) der beiden Detektorelemente des zweiten Paares (20) zwischen zwei Filterfolien (62a, 62b) positioniert ist,
    Bestrahlen des Ortsdosimeters (1) an dem festgelegten Ort mit Photonenstrahlung (P) in dem Energiebereich von zumindest 10 keV bis 10 MeV über eine gewisse Zeitdauer, wobei die auf das jeweils erste Detektorelement (12, 22) treffende Photonenstrahlung (P) von den vor und hinter dem jeweils ersten Detektorelement (12, 22) angeordneten Filterfolien (52a, 52b, 62a, 62b) gefiltert wird,
    Auslesen des Ortsdosimeters (1) nach der Zeitdauer der Bestrahlung, wobei das erste und zweite Detektorelement (12, 14) des ersten Paares (10) und das erste und zweite Detektorelement (22, 24) des zweiten Paares (20) separat ausgelesen werden, wobei ein erster Messwert für die Strahlungsdosis auf dem ersten Detektorelement (12) des ersten Paares (10), ein zweiter Messwert für die Strahlungsdosis auf dem zweiten Detektorelement (14) des ersten Paares (10), ein dritter Messwert für die Strahlungsdosis auf dem ersten Detektorelement (22) des zweiten Paares (20) und ein vierter Messwert für die Strahlungsdosis auf dem zweiten Detektorelement (24) des zweiten Paares (20) bestimmt werden, und wobei ein erster gemittelter Messwert durch Mittelung des ersten und dritten Messwertes und ein zweiter gemittelter Messwert durch Mittelung des zweiten und vierten Messwertes gebildet wird,
    Bilden einer gewichteten Summe $\Sigma_{GW}$ aus dem ersten und zweiten gemittelten Messwert, mit vordefinierten Ge-

wichtungsfaktoren $f_1$, $f_2$, welche von der Dicke und dem Material der Filterfolien (52a, 52b) abhängt, wobei die gewichtete Summe $\Sigma_{GW}$ nach folgender Formel berechnet wird: $\Sigma_{GW} = f_1 \cdot MW_{PE+Cu} + f_2 \cdot MW_{PE}$, wobei $MW_{PE+Cu}$ der erste gemittelte Messwert, $MW_{PE}$ der zweite gemittelte Messwert, $f_1$ der Gewichtungsfaktor für den ersten gemittelten Messwert und $f_2$ der Gewichtungsfaktor für den zweiten gemittelten Messwert ist und wobei $f_1 + f_2 = 1$ gilt und die Gewichtungsfaktoren $f_1$ und $f_2$ von der Dicke und dem Material der Filterfolien (52a, 52b) abhängen,
Verwenden der gewichteten Summe $\Sigma_{GW}$ aus den gemittelten Messwerten als Messwert für die Umgebungsäquivalentdosis H*(10).

**Claims**

1. Local dosimeter (1) for measuring the ambient dose rate equivalent (H*(10)) of photon radiation (P), comprising:

   a scattering body (30) for the photon radiation (P) that supplies scattering contributions for the low-energy range of the photon radiation, a detector card (2) embedded in the scattering body (30) with at least a first pair (10) of photon-radiation-sensitive detector elements (12, 14) with the same response characteristic for the photon radiation (P) that is to be measured,
   wherein the detector card (2) defines a card plane (E), and the two detector elements (12, 14) are arranged next to or on top of one another in the card plane (E) on the detector card (2), and wherein the arrangement of the scattering body (30) and of the detector elements (12, 14) is constructed essentially symmetrically with respect to the card plane (E), so that the two detector elements (12, 14) are sensitive to photon radiation from both sides of the card plane (E) in the same way, in order to achieve a measurement of the photon radiation (P) over an angular range of almost 360°,
   **characterised in that**
   in addition to the scattering body (30) supplying the scattering contribution for the low-energy range, two spectral filter membranes (52a, 52b) which change the photon spectrum at the expense of energies less than 30 keV are arranged inside the scattering body (30) in such a way
   that the first (12) of the two detector elements is positioned between the two filter membranes (52a, 52b) so that the photon radiation (P) impinging on the first detector element (12) is filtered either by one (52a) or the other (52b) filter membrane, depending on whether the photon radiation (P) arrives at the first detector element (12) from the front or from behind, wherein the two filter membranes (52a, 52b) have the same characteristics with respect to their spectral filtering effect, in order to achieve the same spectral filtering effect for photon radiation (P) from the front and from the rear, and
   that the second of the two detector elements (14) is not arranged between the kind of filter membranes (52a, 52b) as the first detector element (12) is,
   so that the photon radiation (P) scattered by the scattering body (30) and spectrally filtered by the two filter membranes (52a, 52b) impinging on the first detector element (12) has a different spectral distribution, in particular at energies between 10 keV and 30 keV, from the photon radiation (P) scattered by the scattering body (30) onto the second detector element (14).

2. Local dosimeter (1) according to Claim 1,
   wherein the detector card (2) comprises a second pair (20) of photon-radiation-sensitive detector elements (22, 24) identical to the first pair (10),
   wherein the first of the two detector elements (22) of the second pair (20) is positioned between two filter membranes (62a, 62b), so that the photon radiation (P) impinging on the first detector element (22) of the second pair (20) is filtered by either one (62a) or the other (62b) filter membrane, depending on whether the photon radiation (P) arrives at the first detector element (22) of the second pair (20) from the front of the rear, wherein the two filter membranes (62a, 62b) of the first detector element (22) of the second pair (20) are identically constructed with respect to their spectral filtering effect, so that the same filtering effect is achieved for photon radiation (P) from the front and from the rear, and wherein the filter membranes (62a, 62b) of the first detector element (22) of the second pair (20) and the filter membranes (52a, 52b) of the first detector element (12) of the first pair (10) are identically constructed with respect to their filtering effect,
   wherein the second (24) of the two detector elements of the second pair (20) is not arranged between the kind of filter membranes (62a, 62b) as the first detector element (22) of the second pair (20) is, so that the photon radiation (P) impinging on the second detector element (24) of the second pair (20) is **characterised by** different spectral distribution from the spectrally filtered photon radiation (P) impinging on the first detector element (22) of the second pair (20).

**3.** Local dosimeter (1) according to Claim 1 or 2,
wherein the detector elements (12, 14, 22, 24) are thermoluminescence detector elements and/or
wherein the scattering body (30) is manufactured of a plastic which consists essentially only of carbon and hydrogen atoms.

**4.** Local dosimeter (1) according to one of the preceding claims,
wherein the scattering body (30) is, at least in a plane transverse to the plane of the card (E), rotationally symmetrical.

**5.** Local dosimeter (1) according to Claims 2 and 4,
wherein the first and second pair (10, 20) of detector elements (12, 14, 22, 24) are arranged with mirror symmetry about the cylinder axis (S).

**6.** Local dosimeter (1) according to one of the preceding claims,
wherein the scattering body (30) is divided along the plane of the card (E) into two halves (32a, 32b), wherein the two halves (32a, 32b) can move relative to one another between an open condition and a closed operating condition, wherein the two halves (32a, 32b) when in the closed operating condition are joined together detachably and constitute an internal cavity in which the detector card (2) is embedded, and wherein the detector card (2) can be inserted and removed when in the open state.

**7.** Local dosimeter (1) according to Claim 6,
wherein the two halves (32a, 32b) are joined together rotatably about an axis perpendicular to the plane of the card (E), and can be turned with respect to one another between the open condition and the closed operating condition in order to enclose the detector card (2) in the cavity of the scattering body (30), said space being enclosed on all sides when in the operating condition, and the detector card (2) can be inserted and removed when in the open condition.

**8.** Local dosimeter (1) according to Claim 6 or 7,
wherein the two filter membranes (52a, 52b) are each attached at locations on one of the two halves (32a, 32b) between which the first detector element (12) comes to rest when it is embedded in the operating condition in the cavity between the two halves (32a, 32b).

**9.** Local dosimeter (1) according to Claim 6, 7 or 8,
wherein the two halves (32a, 32b) are surrounded in the operating condition by a protective covering that has no significant spectral effect.

**10.** Local dosimeter (1) according to Claim 9,
wherein the protective covering consists of plastic.

**11.** Local dosimeter (1) according to one of the preceding claims,
wherein the scattering body (30) is not surrounded by a metallic housing.

**12.** Local dosimeter (1) according to one of the preceding claims,
wherein the filter membranes (52a, 52b, 62a, 62b) are manufactured from the material with a charge number greater than or equal to 12.

**13.** Method for measuring the ambient dose rate equivalent (H*(10)) of photon radiation (P) in an energy range from 10 keV up to 10 MeV with a local dosimeter (1), in particular according to one of the preceding claims,
provision of the local dosimeter (1) at a specified location that is subject to radiation, wherein the local dosimeter (1) comprises a scattering body (30) for the photon radiation (P) and a detector card (2) with a pair (10) of photon-radiation-sensitive detector elements (12, 14) with the same response characteristic to the photon radiation (P) that is to be measured in the interior of the scattering body (30), wherein the first (12) of the two detector elements is positioned between two filter membranes (52a, 52b),
exposure of the local dosimeter (1) at the specified location to photon radiation (P) in the range of energies from at least 10 keV up to 10 MeV over a certain period of time, wherein the photon radiation (P) impinging upon the first detector element (12) is filtered by the filter membranes (52a, 52b) that are arranged in front of and behind the first detector element (12),
reading the local dosimeter (1) after the exposure period, wherein the first and second detector elements (12, 14) are read separately, and a first measured value for the radiation dose on the first detector element (12) and a second measured value for the radiation dose on the second detector element (14) are determined,
forming a weighted sum $\Sigma_{GW}$ of the first and second measured values with predefined weighting factors $f_1$, $f_2$ that depend on the thickness and the material of the filter membranes (52a, 52b), wherein the weighted sum $\Sigma_{GW}$ is determined according to the following formula:

$$\Sigma_{GW} = f_1 \cdot MW_{PE+Cu} + f_2 \cdot MW_{PE}$$

where $MW_{PE+Cu}$ is the first measured value, $MW_{PE}$ the second measured value, $f_1$ is the weighting factor for the first measured value and $f_2$ is the weighting factor for the second measured value, where $f_1 + f_2 = 1$, and where the weighting factors $f_1$ and $f_2$ depend on the thickness and on the material of the filter membranes (52a, 52b), using the weighted sum $\Sigma_{GW}$ as the measured value for the ambient dose rate equivalent H*(10).

14. Method for measuring the ambient dose rate equivalent (H*(10)) of photon radiation (P) in an energy range from 10 keV up to 10 MeV with a local dosimeter (1), in particular according to one of the preceding claims 1-12, provision of the local dosimeter (1) at a specified location that is subject to radiation, wherein the local dosimeter (1) comprises a scattering body (30) for the photon radiation (P) and a detector card (2) with a first pair (10) of photon-radiation-sensitive detector elements (12, 14) with the same response characteristic to the photon radiation (P) that is to be measured and a second pair (20) of photon-radiation-sensitive detector elements (22, 24) with the same response characteristic to the photon radiation (P) that is to be measured in the interior of the scattering body (30), wherein the first (12) of the two detector elements of the first pair is positioned between two filter membranes (52a, 52b) and the first (22) of the two detector elements of the second pair (20) is positioned between two filter membranes (62a, 62b), exposure of the local dosimeter (1) at the specified location to photon radiation (P) in the range of energies from at least 10 keV up to 10 MeV over a certain period of time, wherein the photon radiation (P) impinging upon the first detector element (12, 22) is filtered by the filter membranes (52a, 52b, 62a, 62b) that are arranged in front of and behind the first detector element (12, 22), reading the local dosimeter (1) after the exposure period, wherein the first and second detector elements (12, 14) of the first pair (10) and the first and second detector elements (22, 24) of the second pair (20) are read separately, and a first measured value for the radiation dose on the first detector element (12) of the first pair (10), a second measured value for the radiation dose on the second detector element (14) of the first pair (10), a third measured value for the radiation dose on the first detector element (22) of the second pair (20) and a fourth measured value for the radiation dose on the second detector element (24) of the second pair (20) are determined, and where a first mean measured value is formed by taking the mean of the first and third measured values and a second mean measured value is obtained by taking the mean of the second and fourth measured values, forming a weighted sum $\Sigma_{GW}$ of the first and second mean measured values with predefined weighting factors $f_1$, $f_2$ that depend on the thickness and the material of the filter membranes (52a, 52b), wherein the weighted sum $\Sigma_{GW}$ is determined according to the following formula:

$$\Sigma_{GW} = f_1 \cdot MW_{PE+Cu} + f_2 \cdot MW_{PE}$$

where $MW_{PE+Cu}$ is the first mean measured value, $MW_{PE}$ the second mean measured value, $f_1$ is the weighting factor for the first mean measured value and $f_2$ is the weighting factor for the second mean measured value, where $f_1 + f_2 = 1$, and where the weighting factors $f_1$ and $f_2$ depend on the thickness and on the material of the filter membranes (52a, 52b), using the weighted sum $\Sigma_{GW}$ as the measured value for the ambient dose rate equivalent H*(10).

**Revendications**

1. Dosimètre local (1) pour la mesure de doses équivalentes (H*(10)) dans un environnement d'un rayonnement de photons (P) comprenant :

   un corps de dispersion (30) pour le rayonnement de photons (P), ledit corps fournissant des parts de diffusion pour le domaine des faibles énergies du rayonnement de photons, une carte à détecteurs (2) insérée dans le corps de dispersion (30) avec au moins une première paire (10) d'éléments détecteurs (12, 14) sensibles au rayonnement de photons et avec le même comportement de réponse pour le rayonnement de photons (P) devant être mesuré,

sachant que la carte à détecteurs (2) définit un plan de la carte (E), et que les deux éléments détecteurs (12, 14) sont disposés l'un à côté de l'autre ou superposés dans le plan (E) sur la carte à détecteurs(2), et sachant que l'arrangement constitué du corps de dispersion (30) et des éléments détecteurs (12, 14) est monté essentiellement symétrique par rapport au plan de la carte (E), de sorte que les deux éléments détecteurs (12, 14) pour le rayonnement de photons des deux côtés du plan de la carte (E) sont sensibles de manière identique, afin d'obtenir une mesure du rayonnement de photons (P) dans un champ angulaire de presque 360°,

**caractérisé en ce**

**qu'**en plus du corps de dispersion (30) fournissant des parts de diffusion pour le domaine des faibles énergies, deux feuilles filtre spectrales (52a, 52b) modifiant le spectre des photons au détriment des énergies inférieures à 30 keV sont disposées à l'intérieur du corps de dispersion (30) de sorte

**que** le premier (12) des deux éléments détecteurs est positionné entre les deux feuilles filtre (52a, 52b), de sorte que le rayonnement de photons (P) rencontrant le premier élément détecteur (12) est filtré ou bien par l'une (52a) ou l'autre feuille filtre (52b), selon que le rayonnement de photons (P) rencontre le premier élément détecteur (12) par devant ou par derrière, sachant que les deux feuilles filtre (52a, 52b) sont formées de manière identique en ce qui concerne leur effet de filtre spectral, afin d'obtenir pour le rayonnement de photons (P) par devant et par derrière le même effet de filtre spectral, et

**que** le second des deux éléments détecteurs (14) n'est pas disposé entre de telles feuilles filtre (52a, 52b) comme le premier élément détecteur (12),

de sorte que le rayonnement de photons (P) diffusé par le corps de dispersion (30) et filtré spectralement par l'une des deux feuilles filtre (52a, 52b) rencontrant le premier élément détecteur (12), en particulier pour des énergies entre 10 keV et 30 keV, présente une répartition spectrale différente du rayonnement de photons (P) diffusé par le corps de dispersion (30) et rencontrant le second élément détecteur (14).

2. Dosimètre local (1) selon la revendication 1,
sachant que la carte à détecteurs (2) présente une seconde paire (20) d'éléments détecteurs (22, 24) sensibles au rayonnement de photons, laquelle est identique à la première paire (10),
sachant que le premier des deux éléments détecteurs (22) de la seconde paire (20) est positionné entre deux feuilles filtre (62a, 62b), de sorte que le rayonnement de photons (P) rencontrant le premier élément détecteur (22) de la seconde paire (20) est filtré ou bien par l'une (62a) ou l'autre feuille filtre (62b), selon que le rayonnement de photons (P) rencontre le premier élément détecteur (22) de la seconde paire (20) par devant ou par derrière, sachant que les deux feuilles filtre (62a, 62b) du premier élément détecteur (22) de la seconde paire (20) sont formées de manière identique en ce qui concerne leur effet de filtre spectral, afin d'obtenir pour le rayonnement de photons (P) le même effet de filtre spectral par devant et par derrière, et sachant que les feuilles filtre (62a, 62b) du premier élément détecteur (22) de la seconde paire (20) et les feuilles filtre (52a, 52b) du premier élément détecteur (12) de la première paire (10) sont formées de manière identique en ce qui concerne leur effet de filtre spectral, sachant que le second (24) des deux éléments détecteurs de la seconde paire (20) n'est pas disposé entre de telles feuilles filtre (62a, 62b) comme le premier élément détecteur (22) de la seconde paire (20), de sorte que le rayonnement de photons (P) rencontrant le second élément détecteur (24) de la seconde paire (20) présente une répartition spectrale différente du rayonnement de photons (P) filtré spectralement et rencontrant le premier élément détecteur (22) de la seconde paire (20).

3. Dosimètre local (1) selon la revendication 1ou 2,
sachant que les éléments détecteurs (12, 14, 22, 24) sont des éléments détecteurs thermoluminescents et/ou que le corps de dispersion (30) est fabriqué à partir d'une matière plastique qui n'est essentiellement composée que d'atomes de carbone et d'hydrogène.

4. Dosimètre local (1) selon l'une des précédentes revendications,
sachant que le corps de dispersion (30) est à symétrie de révolution au moins dans un plan transversal au plan de la carte (E).

5. Dosimètre local (1) selon la revendication 2 ou 4,
sachant que la première et la seconde paires (10, 20) contenant les éléments détecteurs (12, 14, 22, 24) sont symétriques par rapport à l'axe de cylindre (S).

6. Dosimètre local (1) selon l'une des précédentes revendications,

sachant que le corps de dispersion (30) le long du plan de la carte (E) est divisé en deux moitiés (32a, 32b), sachant que les deux moitiés (32a, 32b) sont relativement mobiles l'une par rapport à l'autre entre un état de fonctionnement ouvert et un état de fonctionnement fermé, sachant qu'en état de fonctionnement fermé les deux moitiés (32a, 32b) sont reliées ensemble en étant mobiles et forment un espace intérieur creux dans lequel la carte à détecteurs (2) est insérée, et sachant qu'en état de fonctionnement ouvert la carte à détecteurs (2) peut être insérée et retirée.

7. Dosimètre local (1) selon la revendication 6,
sachant que les deux moitiés (32a, 32b) sont raccordées l'une à l'autre en étant rotatives autour d'un axe perpendiculaire au plan de la carte (E) et, entre l'état de fonctionnement ouvert et l'état de fonctionnement fermé, elles peuvent être tournées relativement l'une par rapport à l'autre afin d'incorporer la carte à détecteurs (2) dans l'espace creux du corps de dispersion (30) fermé de tous les côtés en état de fonctionnement, et de pouvoir insérer et retirer la carte à détecteurs (2) en état de fonctionnement ouvert.

8. Dosimètre local (1) selon la revendication 6 ou 7,
sachant que les deux feuilles filtre (52a, 52b) sur respectivement l'une des deux moitiés (32a, 32b) sont fixées sur des points entre lesquels le premier élément détecteur (12) vient se poser lorsqu'il est inséré en état de fonctionnement dans l'espace creux entre les deux moitiés (32a, 32b).

9. Dosimètre local (1) selon la revendication 6, 7 ou 8,
sachant qu'en état de fonctionnement, les deux moitiés (32a, 32b) sont entourées par une enveloppe de protection essentiellement inefficace spectralement.

10. Dosimètre local (1) selon la revendication 6,
sachant que l'enveloppe de protection est constituée de plastique.

11. Dosimètre local (1) selon l'une des précédentes revendications,
sachant que le corps de dispersion (30) n'est pas entouré par un boîtier métallique.

12. Dosimètre local (1) selon l'une des précédentes revendications,
sachant que les feuilles filtre (52a, 52b, 62a, 62b) sont fabriquées à partir d'un matériau ayant un numéro atomique supérieur ou égal à 12.

13. Procédé de mesure de doses équivalentes (H*(10)) du rayonnement de photons (P) dans un domaine d'énergie de 10 keV à 10 MeV avec un dosimètre local (1), en particulier selon l'une des précédentes revendications,
mise en place du dosimètre local (1) sur un emplacement déterminé exposé au rayonnement, sachant que le dosimètre local (1) comprend un corps de dispersion (30) pour le rayonnement de photons (P) et une carte à détecteurs (2) avec, à l'intérieur du corps de dispersion (30), une paire (10) d'éléments détecteurs (12, 14) sensibles au rayonnement de photons ayant le même comportement de réponse pour le rayonnement de photons devant être mesuré (P), sachant que le premier (12) des deux éléments détecteurs est positionné entre deux feuilles filtre (52a, 52b),
sur l'emplacement déterminé, exposition du dosimètre local (1) au rayonnement de photons (P) dans le domaine d'énergie d'au moins 10 keV à 10 Mev pendant un certain temps, sachant que le rayonnement de photons (P) rencontrant le premier élément détecteur (12) est filtré par les feuilles filtre (52a, 52b) disposées devant et derrière le premier élément détecteur (12),
lecture du dosimètre local (1) après la durée de l'exposition au rayonnement, sachant que le premier et le second éléments détecteurs (12, 14) sont lus séparément et qu'une première valeur mesurée est déterminée pour la dose de rayonnement sur le premier élément détecteur (12) ainsi qu'une seconde valeur mesurée pour la dose de rayonnement sur le second élément détecteur (14),
formation d'une somme pondérée $\sum_{GW}$ à partir de la première et de la seconde valeurs mesurées, avec des facteurs de pondération prédéfinis $f_1$, $f_2$, ladite somme dépendant de l'épaisseur et du matériau des feuilles filtre (52a, 52b), sachant que la somme pondérée $\sum_{GW}$ est calculée selon la formule suivante : $\sum_{GW} = f_1 \cdot MW_{PE+Cu} + f_2 \cdot MW_{PE}$, où $MW_{PE+Cu}$ est la première valeur mesurée, $MW_{PE}$ la deuxième valeur mesurée, $f_1$ le facteur de pondération pour la première valeur mesurée et $f_2$ le facteur de pondération pour la deuxième valeur mesurée, et sachant que $f_1 + f_2 = 1$ et les facteurs de pondération $f_1$ et $f_2$ dépendent de l'épaisseur et du matériau des feuilles filtre (52a, 52b),
utilisation de la somme pondérée comme valeur mesurée pour les doses équivalentes H*(10).

14. Procédé de mesure de doses équivalentes (H*(10)) du rayonnement de photons (P) dans un domaine d'énergie de 10 keV à 10 MeV avec un dosimètre local (1), en particulier selon l'une des précédentes revendications 1 à 12,

mise en place du dosimètre local (1) sur un emplacement déterminé exposé au rayonnement, sachant que le dosimètre local (1) comprend un corps de dispersion (30) pour le rayonnement de photons (P) et une carte à détecteurs (2) avec une première paire (10) d'éléments détecteurs (12, 14) sensibles au rayonnement de photons ayant le même comportement de réponse pour le rayonnement de photons (P) devant être mesuré et, à l'intérieur du corps de dispersion (30), une seconde paire (20) d'éléments détecteurs (22, 24) sensibles au rayonnement de photons ayant le même comportement de réponse pour le rayonnement de photons (P) devant être mesuré, sachant que le premier (12) des deux éléments détecteurs de la première paire est positionné entre deux feuilles filtre (52a, 52b) et que le premier (22) des deux éléments détecteurs de la seconde paire (20) est positionné entre deux feuilles filtre (62a, 62b),

sur l'emplacement déterminé, exposition du dosimètre local (1) au rayonnement de photons (P) dans le domaine d'énergie d'au moins 10 keV à 10 MeV pendant un certain temps, sachant que le rayonnement de photons (P) rencontrant respectivement le premier élément détecteur (12, 22) est respectivement filtré par les feuilles filtre (52a, 52b, 62a, 62b) disposées devant et derrière le premier élément détecteur (12, 22),

lecture du dosimètre local (1) après la durée de l'exposition au rayonnement, sachant que le premier et le second éléments détecteurs (12, 14) de la première paire (10) et le premier et le second éléments détecteurs (22, 24) de la seconde paire (20) sont lus séparément, sachant qu'une première valeur mesurée pour la dose de rayonnement sur le premier élément détecteur (12) de la première paire (10), une deuxième valeur mesurée pour la dose de rayonnement sur le second élément détecteur (14) de la première paire (10), une troisième valeur mesurée pour la dose de rayonnement sur le premier élément détecteur (22) de la seconde paire (20) et une quatrième valeur mesurée pour la dose de rayonnement sur le second élément détecteur (24) de la seconde paire (20) sont déterminées, et sachant qu'une première valeur moyenne mesurée est constituée par moyennage de la première et troisième valeur mesurée et qu'une deuxième valeur moyenne mesurée est constituée par moyennage de la deuxième et quatrième valeur mesurée,

formation d'une somme pondérée $\sum_{GW}$ à partir de la première et de la seconde valeur moyenne mesurée, avec des facteurs de pondération prédéfinis $f_1$, $f_2$, ladite somme dépendant de l'épaisseur et du matériau des feuilles filtre (52a, 52b), sachant que la somme pondérée est calculée selon la formule suivante : $\sum_{GW} = f_1 \cdot MW_{PE+Cu} + f_2 \cdot MW_{PE}$, où $MW_{PE+CU}$ est la première valeur moyenne mesurée, $MW_{PE}$ la deuxième valeur moyenne mesurée, $f_1$ le facteur de pondération pour la première valeur moyenne mesurée et $f_2$ le facteur de pondération pour la deuxième valeur moyenne mesurée, et sachant que $f_1+f_2= 1$ et que les facteurs de pondération $f_1$ et $f_2$ dépendent de l'épaisseur et du matériau des feuilles filtre (52a, 52b),

utilisation de la somme pondérée $\sum_{GW}$ à partir des valeurs moyennes mesurées faisant office de valeur mesurée pour les doses équivalentes H*(10).

Fig. 1

Fig. 2

Fig. 3

Fig. 4

Fig. 5

## Fig. 6

## Fig. 7

## Fig. 8

## Fig. 9

Fig. 10

Ansprechvermögen auf Cs-137 normiert ( 75°)

94

98

rel. Messwerte

Energie [keV]

PE + Cu ——— PE

98        94

Fig. 11

Ansprechvermögen auf Cs-137 normiert und gewichtet

104

108

rel. Messwerte

Energie [keV]

0°  ——— 75°

104    108

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69711199 T2
- DE 1489922

- DE 3903113 A1

**In der Beschreibung aufgeführte Nicht-Patentliteratur**

- **A.R. LAKSHMANAN et al.** Estimation of ambient dose equivalent from environmental radiation using a CaSO4 thermoluminescence dosemeter. *Radiation Protection Dosimetry,* 1990, vol. 32 (2), ISSN 0144-8420, 127-130
- **O.R. PERRY et al.** Li:Mg, Cu, P based environmental dosemeter and dose calculation algorithm. *Radiation Protection Dosimetry,* 1999, vol. 85 (1-4), ISSN 0144-8420, 273-281

- **C. HRANITZKY et al.** The use of the Monto Carlo simulation technique for the design of an H*10 dosemeter based on TLD-100. *Radiation Protection Dosimetry,* 2002, vol. 101 (1-4), ISSN 0144-8420, 279-282
- **C. HRANITZKI.** Prototype Development of a Thermoluminescence Dosimeter Based on Monte Carlo Simulation Methods. *11th International Congress of the International Radiation Protection Association,* 23. Mai 2004